# EUROPEAN PATENT APPLICATION

(11) **EP 3 605 527 A2**
(43) Date of publication of application: **05.02.2020**
(21) Application number: 19186657.3
(22) Date of filing: 16.07.2019
(51) Int. Cl.: G10L 15/18, G06F 17/28, G10L 15/22

(54) **VISUALLY PRESENTING INFORMATION RELEVANT TO A NATURAL LANGUAGE CONVERSATION**

(30) Priority: 02.08.2018 US 201816052930; 19.03.2019 KR 20190031067
(71) Applicant: SoundHound, Inc., Santa Clara, CA 95054 (US)
(72) Inventor: MONT-REYNAUD, Bernard, Santa Clara, CA California 95054 (US); PROBELL, Jonah, Santa Clara, CA California 95054 (US)
(74) Representative: Smith, Jeremy Robert

(57) **Abstract**

The present disclosure extends to methods, systems, and computer program products for automatically visually presenting information relevant to an utterance. Natural language expressions from conversation participants are received and processed to determine a topic and concepts, a search finds relevant information and it is visually displayed to an assisted user. Applications can include video conferencing, wearable devices, augmented reality, and heads-up vehicle displays. Topics, concepts, and information search results are analyzed for relevance and non-repetition. Relevance can depend on a user profile, conversation history, and environmental information. Further information can be requested through non-verbal modes. Searched and displayed information can be in languages other than that spoken in the conversation. Many-party conversations can be processed.

## Description

### BACKGROUND

### 1. Field of the Invention

This invention relates generally to displaying information and, more particularly to automatically visually presenting information relevant to an utterance during a natural language conversation.

### 2. Related Art

During a conversation, sometimes we forget the name of something we want to refer to. Sometimes we wish to look something up immediately, but we can't access a browser without interrupting the conversation, especially when using an informational device with a speech interface, such as Amazon Alexa. Sometimes we wish for information about something that another conversation participant mentioned. Sometimes we aren't even aware of it, yet, but the conversation is likely to take a turn in which we are very likely to need a certain piece of information.

For example, during a conversation about an upcoming football game, it would be nice to know the weather forecast. For another example, when arriving for a lunch with a former co-worker, you might want to ask how their kid is doing, by name, but might not remember the name of the co-worker's child. For another example, within a multi-player game, it would be nice to know the status of team members.

### BRIEF DESCRIPTION OF THE DRAWINGS

The specific features, aspects and advantages of the present invention will become better understood with regard to the following description and accompanying drawings where:
Figure 1 illustrates an example computer architecture that facilitates automatically visually presenting information related to an utterance.
Figure 2 illustrates a flow chart of an example method for automatically visually presenting information related to an utterance.
Figure 3 illustrates another example computer architecture that facilitates automatically visually presenting information related to an utterance.
Figure 4 illustrates another flow chart of an example method for automatically visually presenting information related to an utterance.
Figure 5 illustrates a further example computer architecture that facilitates automatically visually presenting information related to an utterance.
Figure 6 illustrates a further flow chart of an example method for automatically visually presenting information related to an utterance.
Figure 7 illustrates a data flow for displaying information in response to natural language expressions.
Figure 8 illustrates a data flow for displaying information in response to natural language expressions using a relevance score.
Figure 9 illustrates a data flow for displaying information in response to natural language expressions for multiple topics.
Figure 10 illustrates a data flow for displaying information in response to natural language expressions for multiple topics.
Figure 11 illustrates a data flow for displaying information in response to natural language expressions without repetition of information.
Figure 12 illustrates a data flow for displaying information in response to natural language expressions using a concept for searching.
Figure 13 illustrates a data flow for displaying information in response to natural language expressions and accepting a request for further information.
Figure 14 illustrates a data flow for displaying information in response to natural language expressions in an alternate human language.
Figure 15 illustrates a data flow for displaying information in response to natural language expressions based on relevance for a particular user.
Figure 16 illustrates a data flow for displaying information in response to natural language expressions from multiple people.
Figure 17 illustrates a computer architecture supporting multiple devices according to an embodiment.
Figure 18A illustrates a computer architecture with device modules relative to media interfaces.
Figure 18B illustrates a computer architecture with device modules relative to media interfaces for a single assisted user.
Figure 19 illustrates a video conferencing system.
Figure 20 illustrates a wearable device.
Figure 21 illustrates virtual reality glasses.
Figure 22 illustrates a vehicle heads-up display.
Figure 23A illustrates an example rotating disk.
Figure 23B illustrates an example Flash Random Access Memory (RAM) chip.
Figure 24A illustrates an example solder ball side of a packaged System On Chip (SoC).
Figure 24B illustrates an example architecture of a System On Chip (SoC).
Figure 25A illustrates an example of a rack-based server.
Figure 25B illustrates an example architecture of a server.

### DETAILED DESCRIPTION

The present invention extends to methods, systems, machines, manufacture products, and computer program products for automatically visually presenting information relevant to an utterance. According to a dictionary, an utterance is an uninterrupted chain of spoken or written language. Whether they are speech or text, utterances are always verbal. A conversation is a sequence of turns, where each turn is an utterance. In this specification, utterances are also called natural language expressions and the terms are used interchangeably. A natural language expression (NLE) may consist, for example, of one or more spoken words, a spoken phrase, a spoken sentence, or a few words of text.

Aspects of the invention use natural language understanding (NLU) and search to identify information related to an utterance in essentially real-time. NLU comprises parsing expressions according to grammar rules and interpretation of the parse according to semantic meaning of terms extracted by the parsing. Search is any class of algorithms for finding desired information, if present, within a corpus of information, such as by using tags, indexing, sorting, or other methods taught in computer science courses.

Identified relevant information can be visually displayed also essentially in real-time at a device, such as, for example, during a phone call, a video conference, a game, or an augmented reality experience. The relevance of the information can be anticipated and the relevant information presented by providing relevant information, based on the conversation, just in time. Relevant information automatically appears on a display visible to a person.

Some aspects compute a relevance score and filter information based on its relevance. Other embodiments compute a relevance score by comparison to a threshold or by comparison of relevance scores between different pieces of information. Redundancy between relevant pieces of information and already displayed information can be detected to ensure that displayed information is not duplicated during a conversation. However, information displayed in the past but no longer displayed can be displayed again, if found again relevant. Displayed information can relate to topics such as weather, sports, regions; or to identified concepts such as specifc entities or activities.

In one aspect, an utterance is received from a first person and relevant information displayed to a second person. In another aspect, an utterance is received from a first person and relevant information displayed to both the first person and a second person.

Aspects can assist a person with requesting further information, saving information for later use, or sharing information with others. A person can provide feedback about displayed information, such as, its relevance. Information can be translated between different human languages.

Some aspects overlay displayed information on a display with human faces, compute face location detection, and dynamically arrange the display to avoid overlapping faces. Information selection can be adapted to display based on a user profile or on environmental factors. NLU can be performed on natural language expressions from multiple or many people in a conversation. Optionally, ads or other persuasive information can be displayed along with information related to verbal communication.

Devices implementing aspects of the invention include video conferencing systems, augmented reality eyewear, other wearable devices, or vehicle heads-up displays.

Aspects of the invention provide various benefits, such as, helping participants in conversations remember the names of things that they want to refer to, enabling persons to look up something when they can't access a browser immediately or it would interrupt the conversation to use an informational device with a speech interface, providing information about something other conversation participants mention, and presenting pieces of information that may be relevant to an upcoming conversation turn.

Unlike conventional screencasting, aspects of the invention provide information automatically to a person's interface device. Unlike conventional automatic captioning systems, aspects of the invention understand natural language and respond accordingly. Unlike conventional voice call analysis, aspects of the invention search for relevant information and provide the results of the search to a person. Unlike conventional natural language question-answering systems that merely respond to a single user/speaker, aspects of the invention respond to one or more persons based on what another person says. Unlike conventional augmented reality video conferencing systems, aspects of the invention interpret and act on conversation participants expressions without express commands or manipulation of shared virtual objects.

Embodiments of the present invention may comprise or utilize a special purpose or general-purpose computer including computer hardware, such as, for example, one or more processors and system memory, as discussed in greater detail below. Embodiments within the scope of the present invention also include physical and other computer-readable media for carrying or storing computer-executable instructions and/or data structures. Such computer-readable media can be any available media that can be accessed by a general purpose or special purpose computer system. Computer-readable media that store computer-executable instructions are computer storage media (devices). Computer-readable media that carry computer-executable instructions are transmission media. Thus, by way of example, and not limitation, embodiments of the invention can comprise at least two distinctly different kinds of computer-readable media: computer storage media (devices) and transmission media.

Computer storage media (devices) includes random access memory (RAM), read-only memory (ROM), electrically erasable programmable read-only memory (EEPROM), compact disc read-only memory (CD-ROM), solid state drives ("SSDs") (e.g., based on RAM), Flash memory, phase-change memory ("PCM"), other types of memory, other optical disk storage, magnetic disk storage or other magnetic storage devices, or any other medium which can be used to store desired program code means in the form of computer-executable instructions or data structures and which can be accessed by a general purpose or special purpose computer.

A "network" is defined as one or more data links that enable the transport of electronic data between computer systems and/or modules and/or other electronic devices. When information is transferred or provided over a network or another communications connection (either hardwired, wireless, or a combination of hardwired or wireless) to a computer, the computer properly views the connection as a transmission medium. Transmission media can include a network and/or data links which can be used to carry desired program code means in the form of computer-executable instructions or data structures and which can be accessed by a general purpose or special purpose computer. Combinations of the above should also be included within the scope of computer-readable media.

Further, upon reaching various computer system components, program code means in the form of computer-executable instructions or data structures can be transferred automatically from transmission media to computer storage media (devices) (or vice versa). For example, computer-executable instructions or data structures received over a network or data link can be buffered in RAM within a network interface module (e.g., a "NIC"), and then eventually transferred to computer system RAM and/or to less volatile computer storage media (devices) at a computer system. RAM can also include solid state drives (SSDs or Peripheral Component Interconnect eXtended (PCIx) based real time memory tiered Storage, such as FusionIO). Thus, it should be understood that computer storage media (devices) can be included in computer system components that also (or even primarily) utilize transmission media.

Computer-executable instructions comprise, for example, instructions and data which, when executed at a processor, cause a general purpose computer, special purpose computer, or special purpose processing device to perform a certain function or group of functions. The computer executable instructions may be, for example, binaries, intermediate format instructions such as assembly language, or even source code. Although the subject matter has been described in language specific to structural features and/or methodological acts, it is to be understood that the subject matter defined in the appended claims is not necessarily limited to the described features or acts described above. Rather, the described features and acts are disclosed as example forms of implementing the claims.

Those skilled in the art will appreciate that the invention may be practiced in network computing environments with many types of computer system configurations, including, personal computers, desktop computers, laptop computers, message processors, hand-held devices, multi-processor systems, microprocessor-based or programmable consumer electronics, network PCs, minicomputers, mainframe computers, mobile telephones, personal digital assistants (PDAs), tablets, pagers, routers, switches, various storage devices, and the like. The invention may also be practiced in distributed system environments where local and remote computer systems, which are linked (either by hardwired data links, wireless data links, or by a combination of hardwired and wireless data links) through a network, both perform tasks. In a distributed system environment, program modules may be located in both local and remote memory storage devices.

Embodiments of the invention can also be implemented in cloud computing environments. In this description and the following claims, "cloud computing" is defined as an approach to enabling ubiquitous, convenient, on-demand network access to a shared pool of configurable computing resources (e.g., networks, servers, storage, applications, and services) that can be rapidly provisioned via virtualization and released with minimal management effort or service provider interaction, and then scaled accordingly. A cloud approach can be composed of various characteristics (e.g., on-demand self-service, broad network access, resource pooling, rapid elasticity, measured service, etc.), service (e.g., Software as a Service (SaaS), Platform as a Service (PaaS), Infrastructure as a Service (IaaS), and deployments (e.g., private cloud, community cloud, public cloud, hybrid cloud, etc.). Databases and servers described with respect to the present invention can be included in a cloud approach.

Further, where appropriate, functions described herein can be performed in one or more of: hardware, software, firmware, digital components, or analog components. For example, one or more application specific integrated circuits (ASICs) can be manufactured or field programmable gate arrays (FPGAs) programmed to carry out one or more of the systems and procedures described herein. Certain terms are used throughout the following description and Claims to refer to particular system components. As one skilled in the art will appreciate, components may be referred to by different names. This document does not intend to distinguish between components that differ in name, but not function.

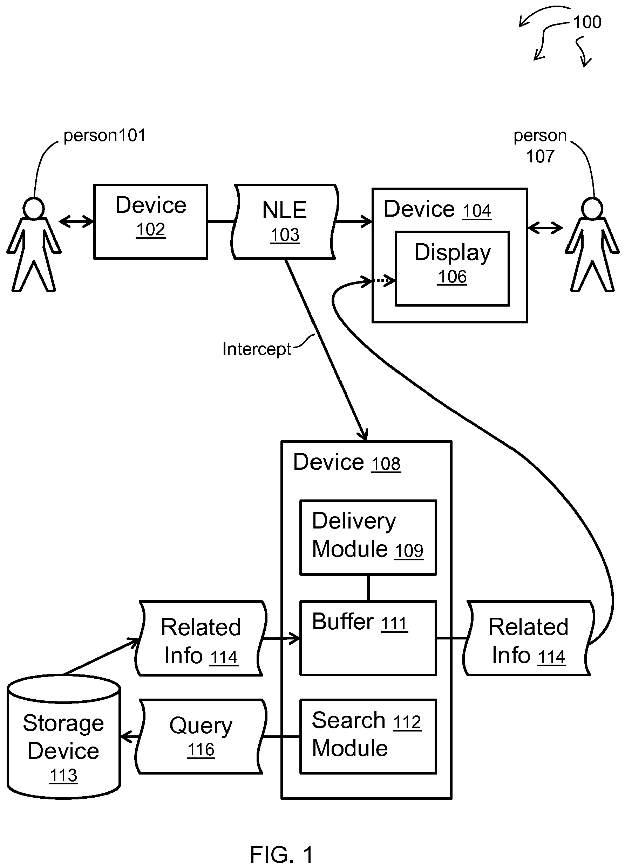

Figure 1 illustrates a computer architecture 100 that facilitates automatically visually presenting information related to an utterance. As depicted, computer architecture 100 includes devices 102, 104, and 108 and network storage 113. Device 104 further includes display 106. Device 108 further includes delivery module 109, buffer 111, and search module 112.

Devices 102 and 104 are electronic/digital devices capable of communicating with one another over a communication network (e.g., mobile phones, computer systems, etc.). Each of devices 102 and 104 can also include components, such as, a microphone and a speaker (not shown), that facilitate the transfer of voice communication. For example, person 101 can speak at or near device 102. A microphone in device 102 converts acoustical energy (sound waves) into electrical energy (an audio signal). Device 102 sends the audio signal (possibly in a digital format) to device 104. The audio signal can carry an utterance over the network to device 104. Device 104 receives the audio signal over the network. A speaker in device 104 converts the audio signal back into acoustical energy (sound waves) reproducing person 101's speech. Person 107 can then hear what person 101 said. Speech from person 107 can be similarly transferred from device 104 to device 102. As such, persons 101 and 107 can conduct a verbal conversation with one another using devices 102 and 104 respectively.

In one aspect, a communication network (e.g., cellular network, a radio network, etc.) allocates one or more communication channels for use by devices 102 and 104. In one aspect, a single channel is allocated to facilitate simplex transfer of voice communication between devices 102 and 104. In another aspect, a plurality of channels is allocated to facilitate duplex transfer of voice communication between devices 102 and 104.

In general, device 108 is configured to monitor communication channels, network connections, etc. between devices 102 and 104. Device 108 can intercept audio signals, such as NLEs, transferred between devices 102 and 107. Search module 112 can formulate search terms based on and related to the content of an intercepted NLE, using automatic speech recognition (ASR) if needed. NLU and domain knowledge, applied to an NLE, can produce additional search parameters such as filters, additional terms, or related information not explicitly expressed in the NLE. One or more search procedures are possible. Search module 112 can submit queries containing the search terms to network storage locations, such as, for example, websites, online databases, social media networks, etc. The search for related information can be expanded according to domain information. For example, a search for a tennis match, or for a hotel in the next few days may expand to include related information about the weather at the date and location of the tennis match or hotel. In response to a query, a network storage location can locate and return information satisfying the various search terms. Thus, a network storage location can return information related to the contents of a NLE transferred between devices 102 and 104 (and thus also related to a conversation between persons 101 and 107).

Device 108 can buffer related information returned from network storage locations in buffer 111. Buffer 111 can be maintained as a cache in system memory, or depend on more persistent storage. Delivery module 109 can anticipate when related information can be of interest to a person. Specifically, delivery module 109 can anticipate a person's interest in related information based on the information content itself and other characteristics of an intercepted NLE (size, device of origin, etc.), content and other characteristics of other intercepted NLEs (transfer frequency, size, device of origin, etc.), knowledge about of the persons (101 or 107) and their current goals and intention, and prior dialog. Other NLEs can be intercepted prior to or subsequent to an intercepted NLE.

Delivery module 109 can transmit the related information from buffer 111 to a device that received an intercepted NLE so that the related information arrives before the related information is to be of interest to the person.

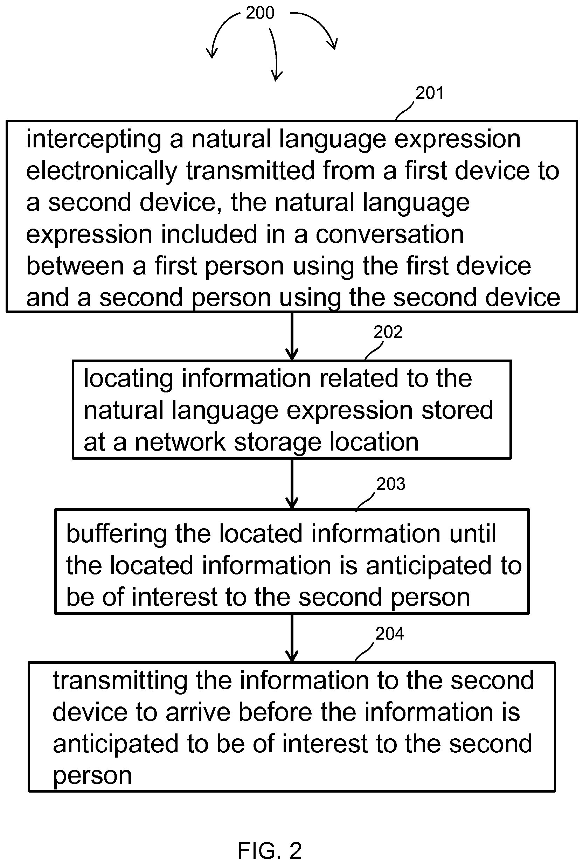

Figure 2 illustrates a flow chart 200 of an example method for automatically visually presenting information related to an utterance. Method 200 will be described with respect to the components and data in computer architecture 100.

Method 200 includes intercepting a natural language expression electronically transmitted from a first device to a second device, the natural language expression included in a conversation between a first person 101 using the first device 102 and a second person 107 using the second device 104. An utterance such as NLE 103 is first intercepted (201) then analyzed for its natural language content. For example, device 108 can intercept NLE 103 when NLE 103 is electronically transmitted from device 102 to device 104. NLE 103 is part of the conversation between person 101 and person 107. The intercepted natural language utterance (NLE 103) is analyzed using NLU techniques. Such analysis may be able to recognize content words, topics, or the utterance's intent. The use of NLU analysis is further discussed below.

Method 200, based on the results of NLU analysis, including any content words, topics or intents extracted from NLE 103, proceeds to locating information related to the natural language expression, stored at a network storage location (202). For example, search module 112 can form one or more queries 116 from the content of NLE 103, using ASR if needed, and possibly NLU and domain knowledge. Search module 112 can submit one or more queries 116 to one or more storage devices 113 including local disks and databases, and network storage locations. Storage locations 113 can receive one or more queries 116 from device 108. In response, storage locations 113 can identify and return related information 114. Related information 114 can be information related to NLE 103.

Method 200 can also include updating a model of the second person's interests, based on any content words, topics or intents extracted from the natural language expression 103, and on the conversation to date. According to some aspects, a model of a person's interests is a long-term data structure stored as part of a user profile. It comprises a list of topics, such as weather, sports, and stock prices. According to some aspects, a model of a person's interests comprises specific entities such as Facebook, Mark Zuckerberg, and the stock ticker symbol FB, and the names of the person's children. According to some aspects, a model of a person's interests comprises indications of level of interest based on the frequency or recency of the person's made or received expressions related to an intent, a topic or a content word such as an entity.

In an aspect, intents are represented as slot-value pairs, and NLU primarily extracts such pairs from the NLE. For example, if the NLE is "*find me a flight from San Francisco to Seattle*" the slot-value pairs may include something like (INTENT, "FLIGHT_RESERVATION), (FLIGHT_FROM, "SFO"), (FLIGHT_TO, "SEA"), (CITY_FROM, "SAN FRANCISCO"), (CITY_TO, "SEATTLE"), associated date and time information, and (TOPIC, "TRAVEL").

In such an embodiment, each dialog turn creates a set (a 'bundle') of slot-value pairs, and the conversation is summarized as a sequence of such bundles. According to some aspects, bundles are stored and transmitted as data structures described using JavaScript Object Notation (JSON) or Extensible Markup Language (XML). Said sequence can be used as a quick summary of the conversation.

In such an embodiment, a model of a person's interests can be updated based on this summary. For example, airport entities ("SFO" and "SEA"), city entities ("SAN FRANCISCO" and "SEATTLE"), the topic ("TRAVEL") and expression intent ("FLIGHT RESERVATION") may all become part of the model. Each slot-value pair for the conversation to date may be given an individual relevance weight. The relevance weights of slot-value pairs in successive bundles can be cumulated or otherwise combined to create a profile of the second person's interests, as a list of entities and relevance weights. Cumulating weights is appropriate when information is compatible, such as inquiring about two flights from "SFO". Combining weights can take other forms, such as reducing the weight of "SEA" after the expression "What if I flew to Vancouver instead?" In other embodiments, a model of a person's interests may take a more complex form than the simple set of topics, intents and entities, each with relevance weights. The power and complexity of the model reflects the depth of understanding of the NLU system; for example, a smarter system might understand negations, hypotheticals, navigation, planning events in time order or at particular calendar dates, and so on. Nevertheless, the relatively simple techniques just described can suffice to update a model of a person's interests based on the conversation to date.

According to some aspects, method 200 also includes computing relevance scores for located information based on a model of a person's interests. Information is located according to a search query based on certain search terms, such as "Seattle weather". In an embodiment of the model based on relevance weights, such as just described, computing relevance scores is simple. In one aspect, the relevance score of search terms not matched in the model is set low; and the relevance score of a search term matched in the model is its relevance weight in the model. In a more complex variant, the relevance weight of "weather" to the "FLIGHT_TO" city is used and multiplied by the relevance weight of "Seattle" to obtain a relevance score for "Seattle weather".

According to some aspects, method 200 also includes comparing relevance scores for located information to a threshold. The threshold may be fixed or it may be scaled to reflect normalization requirements. A threshold may need to be increased if there is an abundance of located information, so that less information is transmitted. This can save bandwidth and avoid overwhelming a system user with too much information.

Method 200 includes buffering the information until the information is anticipated to be of interest to the second person (203). For example, device 108 can buffer related information 114 in buffer 111. Delivery module 109 can anticipate the timing of a person 107's interest in related information 114 based on content and other characteristics of NLE 103 (size, device of origin, etc.), content and other characteristics of other received NLEs (transfer frequency, size, device of origin, etc.), knowledge of persons 101 and/or 107, etc.

Subject to exceeding a relevance score threshold, method 200 includes transmitting the information to the second device for display to the second person (204). For example, delivery module 109 can transmit related information 114 to device 104 so that related information arrives at device 104 before related information 114 is of interest to person 107.

Device 104 can receive related information 114 from device 108. Device 104 can display related information 114 at display 106. Displaying related information 114 at display 106 can provide person 107 insights into the content of NLE 103. In one aspect, related information 114 is displayed concurrently with (e.g., at or near the time of) NLE 103 being output at a speaker of device 104.

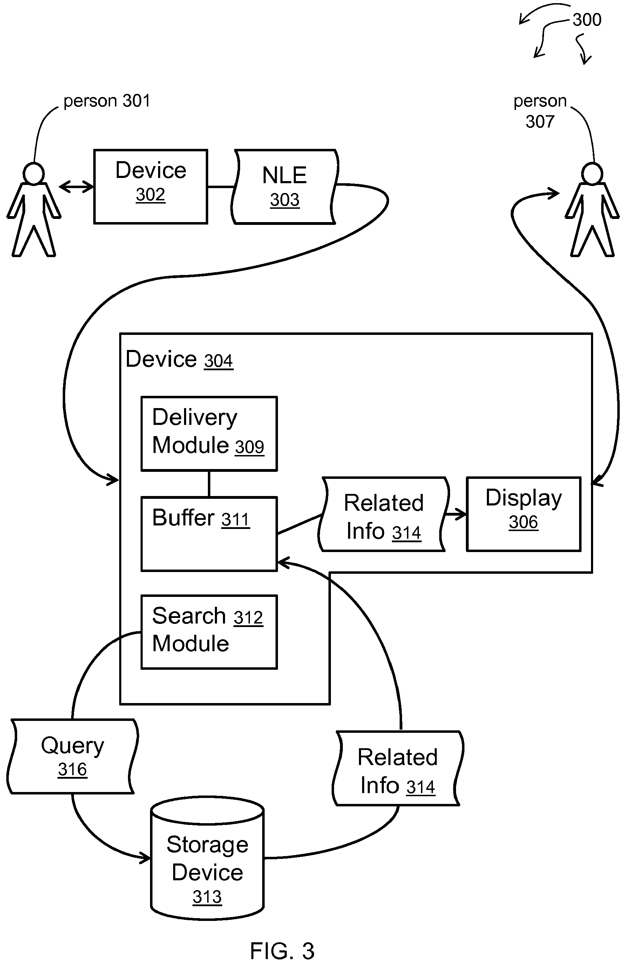

Figure 3 illustrates a computer architecture 300 that facilitates automatically visually presenting information related to an utterance. As depicted, computer architecture 300 includes devices 302 and 304 and storage device 313. Device 304 further includes display 306, delivery module 309, buffer 311, and search module 312.

Devices 302 and 304 are electronic/digital devices capable of communicating with one another over a communication network (e.g., mobile phones, video conferencing units, computer systems, etc.). Each of devices 302 and 304 can also include components, such as, a microphone and a speaker (not shown), that facilitate the transfer of voice communication. For example, person 301 can speak at or near device 302. A microphone in device 302 converts acoustical energy (sound waves) into electrical energy (an audio signal). Device 302 sends the audio signal (possibly in a digital format) to device 304. The audio signal can carry an NLE, such as, for example, one or more spoken words, a spoken phrase, a spoken sentence, etc., over the network to device 304. Device 304 receives the audio signal over the network. A speaker in device 304 converts the audio signal back into acoustical energy (sound waves) reproducing person 301's speech. Person 307 can then hear what person 301 said. Speech from person 307 can be similarly transferred from device 304 to device 302. As such, persons 301 and 307 can conduct a verbal conversation with one another using devices 302 and 304 respectively.

In one aspect, a communication network (e.g., cellular network, a radio network, etc.) allocates one or more communication channels for use by devices 302 and 304. In one aspect, a single channel is allocated to facilitate simplex transfer of voice communication between devices 302 and 304. In another aspect, a plurality of channels is allocated to facilitate duplex transfer of voice communication between devices 302 and 304.

Search module 312 can monitor NLEs received at device 304. Search module 312 can formulate search terms based on and related to the content of a received NLE, using ASR if needed. NLU and domain knowledge can be used to form additional relatedness relationships, and corresponding searches, as described with search module 112. Search module 312 can submit one or more queries 316 to storage devices 313, including, for example, local disk drives, data stores and databases, network storage locations, and web application programming interfaces (APIs). In response to a query, storage devices 313 return information satisfying the search terms. Thus, each storage device can return information related to the contents of a NLE transferred from devices 302 to device 304 (and thus also related to a conversation between persons 301 and 307).

Device 304 can buffer related information returned from a storage device in buffer 311. Buffer 311 can be system memory or more durable storage. Delivery module 309 can anticipate when related information is to be of interest to person 307. Delivery module 309 can anticipate person 307's interest in related information based on content and other characteristics of a received NLE (size, device of origin, etc.), content and other characteristics of other received NLEs (transfer frequency, size, device of origin, etc.), knowledge of persons 301 and/or 307, etc. Other NLEs can be received prior to or subsequent to a received NLE.

Delivery module 309 can display related information from buffer 311 at display 306 when the related information is anticipated to be of interest to person 307.

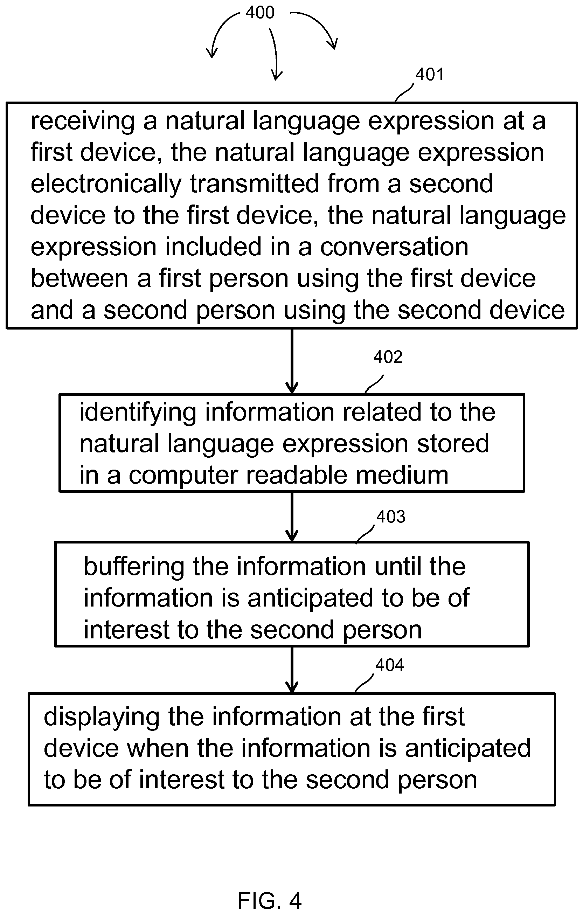

Figure 4 illustrates a flow chart 400 of an example method for automatically visually presenting information related to an utterance. Method 400 will be described with respect to the components and data in computer architecture 300.

Method 400 includes receiving a natural language expression at a first device, the natural language expression electronically transmitted from a second device to the first device, the natural language expression included in a conversation between a first person using the first device and a second person using the second device (401). For example, device 304 can receive NLE 303. Device 302 can transmit NLE 303 to device 304 as part of a conversation between person 301 and person 307.

Method 400 operates essentially like method 200. The natural language utterance (NLE 303) is analyzed using NLU techniques described elsewhere in this specification. Such analysis may recognize keywords, action words, entities, topics and intents. Based on the content words, topics or intents extracted from the natural language expression 303, information related to the natural language expression and stored in a computer readable medium may be identified (402). For example, search module 312 can form one or more queries 316 from the content of NLE 303, using ASR if needed, and possibly NLU and domain knowledge as explained elsewhere. Search module 312 can submit one or more queries 316 to one or more storage devices 313 including local disks and databases, and network storage locations. Such storage devices 313 can receive queries 316 from device 308. In response, storage devices 313 can identify related information 114. Related information 314 can be information related to NLE 303.

Method 400 includes buffering the information until the information is anticipated to be of interest to the second person (403). For example, device 304 can buffer related information 314 in buffer 311. Delivery module 309 can anticipate the timing of a person 307's interest in related information 314 based on content and other characteristics of NLE 303 (size, device of origin, etc.), content and other characteristics of other received NLEs (transfer frequency, size, device of origin, etc.), knowledge of persons 301 and/or 307, etc.

Method 400 includes displaying the information at the first device at the time when the information is anticipated to be of interest to the second person (404). For example, delivery module 309 can display related information 314 from buffer 311 at display 306. Displaying related information 314 at display 306 can provide person 307 insight into the content of NLE 303 and thus into the conversation between persons 301 and 307. In one aspect, related information 314 is displayed concurrently with (e.g., at or near the time of) NLE 303 being output at a speaker of device 304.

For example, if an NLE was about checking to a hotel and the user is traveling through an airport then delivery module 309 schedules delivery of the hotel address for a time when the user is at a taxi line. For another example, in discussions of baseball, people usually ask about the score first, then what inning, then which team is batting, then what's the count of balls and strikes. If an NLE was about the score of a baseball game, search module 312 queries a game stats data storage source 313 for the score, inning, team batting, and the count. The device 304 receives the related information 314 and stores it in buffer 311. Device 304 proceeds to display to person 307 the score only. This is appropriate because in some situations only the score is relevant to a conversation and displaying all of the other related information would be distracting. However, if person 301 mentions the inning, team batting or the count, delivery module 309 causes all of the related information 314 to be shown on display 306 so that person 307 can be well informed of all of the interesting information easily without either person 301 or person 307 needing to explicit request that information.

According to some aspects, natural language domains are programmed with rules indicating related types of information and the conditions under which to display related information. According to some aspects, machine learning algorithms detect patterns of information requests across many users and many conversations and train models, such as neural networks or other predictive models, to predict what types of information are related and what topics, intents, or entities in NLEs trigger the display of the related information.

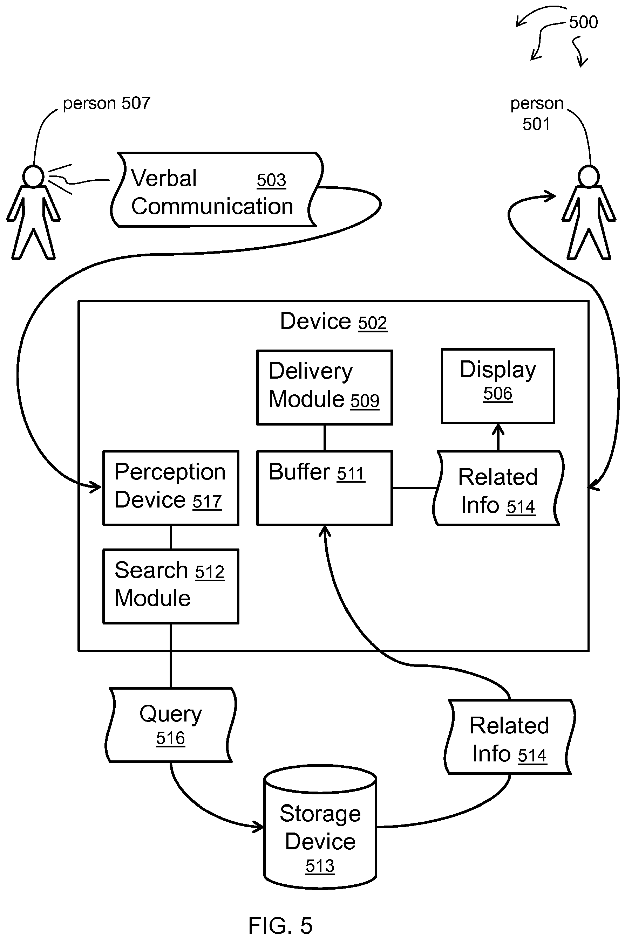

Figure 5 illustrates computer architecture 500 that facilitates automatically visually presenting information related to an utterance. As depicted, computer architecture 500 includes device 502 and storage device 513. Device 502 further includes display 506, delivery module 509, buffer 511, search module 512, and perception device 517.

Device 502 can be a digital device such as, for example, a mobile phone, video game console, AR/VR head set, vehicle with a heads-up windshield display, etc. Device 502 can also include components, such as, a microphone and a speaker (not shown). For example, a person in range of the device 502, for example, person 501 or person 507, can speak at or near device 502. A microphone in device 502 converts acoustical energy (sound waves) into electrical energy (an audio signal). A speaker in device 504 converts audio signals back into acoustical energy (sound waves), for example, reproducing speech.

In one aspect, person 501 wears device 502. Perception device 517 can be connected to the microphone. Perception device 517 can receive verbal communication picked up by the microphone and detect an NLE. Perception device 517 can send the NLE to search module 512.

Search module 512 can formulate search terms based on and related to the content of a received NLE, using ASR if needed. NLU and domain knowledge can be used to create additional relatedness relationships, and the corresponding searches, as described for search module 112. Search module 512 can submit queries containing the search terms to storage devices, such as, for example, disk drivers, data stores, databases, web APIs, etc. In response to a query, a storage device can return information satisfying the search terms. Thus, a storage device can return information related to the contents of a NLE derived at device 502.

Device 502 can buffer related information returned from a storage device in buffer 511. Buffer 511 can be system memory or more durable storage. Delivery module 509 can anticipate when related information is to be of interest to person 501. Delivery module 509 can anticipate the person 501's interest in related information based on content and other characteristics of a detected NLE (size, etc.), content and other characteristics of other detected NLEs (detection frequency, size, etc.), knowledge of persons 501 and/or 507, etc. Other NLEs can be detected prior to or subsequent to a detected NLE.

Delivery module 509 can display related information from buffer 511 at display 506 when the related information is anticipated to be of interest to person 501.

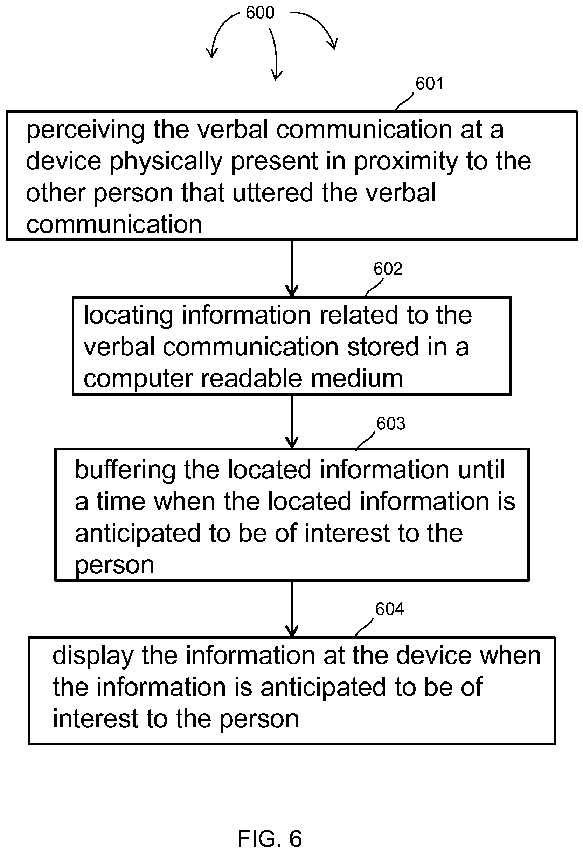

Figure 6 illustrates a chart 600 of an example method for automatically visually presenting information related to an utterance. Method 600 will be described with respect to the components and data in computer architecture 500.

Method 600 includes perceiving verbal communication at a device physically present in proximity to a person that uttered verbal communication (601). For example, perception device 517 can perceive verbal communication 503 uttered by person 507. Perception device 517 can convert verbal communication 502 into an NLE. Perception device 517 can send the NLE to search module 512.

Method 600 includes locating information related to the verbal communication stored in a computer readable medium (602). For example, search module 512 can form one or more queries 516 from the content of the NLE, using ASR if needed, and possibly NLU and domain knowledge as explained for search module 112. The NLE can be analyzed to recognize content words, topics or intents using NLU techniques, as discussed with method 200. Search module 512 can submit one or more queries 516 to one or more storage devices 513 including local disks and databases, network storage locations, and web APIs. In response, storage devices 513 can identify related information 514. Related information 514 can be information related to NLE 503.

Method 600 includes buffering the located information until a time when the located information is anticipated to be of interest to another person (603). For example, device 502 can buffer related information 514 in buffer 511. Delivery module 509 can anticipate the timing of person 501's interest in related information 514 based on content and other characteristics the NLE (size, etc.), content and other characteristics of other detected NLEs (detection frequency, size, etc.), knowledge of persons 501 and/or 507, etc.

Method 600 includes displaying the information at the device when the information is anticipated to be of interest to the other person (604). For example, delivery module 509 can display related information 514 from buffer 511 at display 506. Displaying related information 514 at display 506 can provide person 501 insight into verbal communication 503.

### Natural Language Understanding (NLU)

In all embodiments discussed in this specification, natural language expressions may be analyzed when received, using any of the NLU techniques known in the art. The NLU analysis may include keyword matching, part-of-speech detection, action word detection, entity detection, partial parsing, or full parsing. The NLU analysis may construct an interpretation that represents the meaning of the analyzed NLE. The recognition of content words, such as keywords, may be used to suggest a topic. The analysis of a NLE may include the recognition of its intent.

Based on the results of the NLU analysis, including any keywords or content words, action words, entities, topics or intents or interpretations extracted, the system may proceed to a perform searches, that locate information related to the natural language expression. Searching can exploit domain knowledge, for example, by mapping interpretations to search queries, or by relating content words to topics. In some systems, deductive reasoning supplements searching in locating related information. The relevance of related information will then be determined using techniques described below.

In an aspect, interpretations are represented as slot-value pairs extracted from the NLE by NLU techniques. For example, if NLE is "*find me a flight from San Francisco to Seattle*" relevant slot-value pairs might include something like (INTENT, "FLIGHT_RESERVATION), (FLIGHT_FROM, "SFO"), (FLIGHT_TO, "SEA"), (CITY_FROM, "SAN FRANCISCO"), (CITY_TO, "SEATTLE"), date information in a similar slot-value format, and additional information such as (TOPIC, "TRAVEL").

In such an embodiment, each conversation turn (NLE) creates a set (a 'bundle') of slot-value pairs, and the conversation may be represented as a sequence of such bundles. According to some aspects, bundles are stored and transmitted as data structures described using JavaScript Object Notation (JSON) or Extensible Markup Language (XML). Such a sequence can be used as a quick summary of the conversation, and become the basis for building a model of a person's interests, as discussed later.

According to some aspects, method 200 also includes computing relevance scores for located information based on a model of a person's interests. Information is located according to a search query based on certain search terms, such as "Seattle weather".

In an embodiment of the model based on relevance weights, such as was just described, computing relevance scores is simple. In one aspect, the relevance score of search terms not matched in the model is set low; and the relevance score of search terms matched in the model is its relevance weight in the model. In a more complex embodiment, a relevance weight of "weather" to the "FLIGHT_TO" city is used and multiplied with the relevance weight of "Seattle" to obtain a relevance score for "Seattle weather".

### Data flows

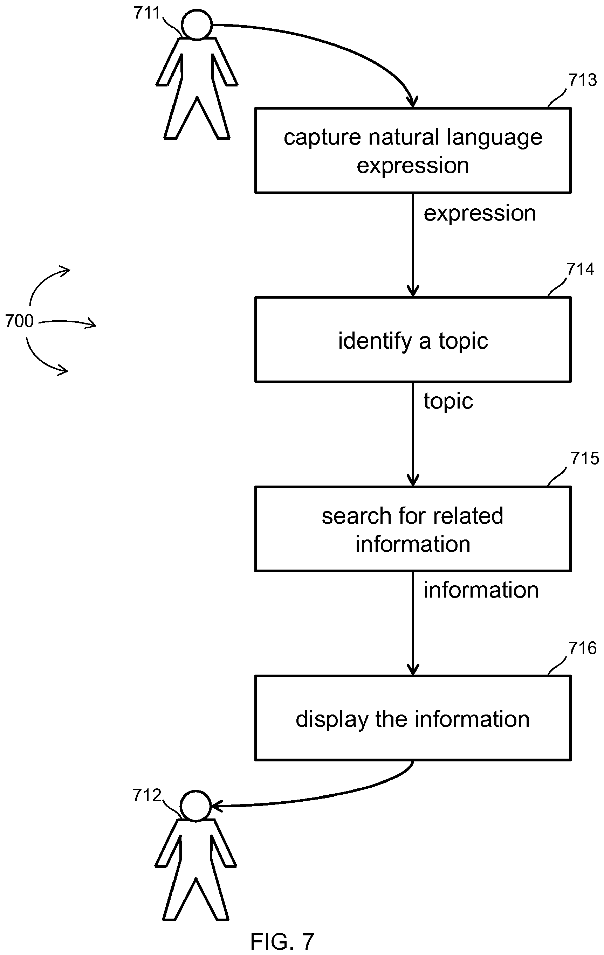

Figures 7-16 depict various data flows 700 - 1600 respectively for visually presenting information relevant to an utterance. Data flows 700 - 1600 can be implemented in any of the architectures 100, 300, and 500 and in other architectures comprising necessary subsets of features shown and described. Data flows 700 - 1600 can be used to supplement and/or in the alternative to methods 200, 400, and 600. Elements depicted in data flows 700 - 1600 can also be used in different combinations and/or permutations.

More specifically, Figure 7 illustrates a data flow 700 for displaying information in response to natural language expressions. In data flow 700, person 711 is engaged in a conversation with an assisted user 712. A NLE is captured from person 711 (713). A topic is identified, for example, by performing NLU on the NLE (714).

In one aspect, a plurality of topics is identified from a single NLE. Domain grammars can be used to recognize one or more topics. Topics can also be associated with keywords. Computed relevance scores can indicate a probability that an expression addresses each of a plurality of topics.

A search for information on the topic and likely to be related to the NLE is performed (715). Information returned in response to the search is displayed to assisted user 712 (716). Information can be displayed at an appropriate time, for example, when the information is anticipated to be of interest to assisted user 712.

Information related to an NLE can be displayed in a browser tab or in a side-by-side view along with other information. Multiple pieces of information related to an NLE can be displayed together with different pieces grouped by content categories and/or sorted by relevance. Pieces of information can also be presented in chronological order such as by when person 711 uttered a triggering natural language expression.

Different interfaces, such as for example, text-based interfaces, audio interfaces, video interfaces, etc. can be used to capture NLEs. In one aspect, text-based interfaces capture natural language expressed as text. In another aspect, voice-based interfaces perform automatic speech recognition on audio signals, such as, ones captured by local or remote microphones, to recognize spoken natural language expressions. Some interfaces overlay generated graphics or text on transparent glass to create an augmented reality experience or heads-up vehicle display. Other interfaces display the relevant information with limited (if any) other graphical elements, such as, a real-time real-life captioning system.

### Relevance scores and thresholds

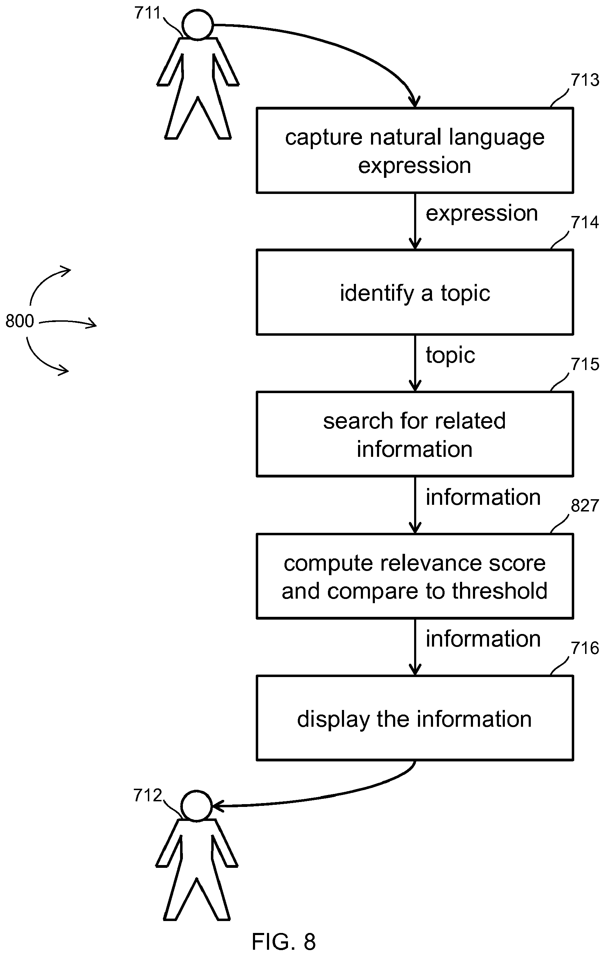

Figure 8 illustrates a data flow 800 for displaying information in response to natural language expressions using a relevance score. An assistive system may not disrupt or distract conversations with less relevant (or irrelevant) information.

In data flow 800, a NLE is captured from person 711 (713). A topic is identified, for example, by performing NLU on the NLE (714). A search for information on the topic and likely to be related to the NLE is performed (715).

A relevance score is computed for information returned in response to the search and the relevance score is compared to a threshold (827). If the relevance score exceeds the threshold, the returned information is displayed to assisted user 712 (716). If the relevance score is below the threshold, the returned information is not displayed.

Relevance scores can be based, at least in part, on pre-existing rules that impact the ranking of search results (and corresponding display decisions) according to specific aspects of the history, including the conversation history. When calculating a relevance score, foreground topics from the most recent query or expression and background topics (from the earlier conversation) can be distinguished. When calculating a relevance score, the roles of conversation participants can also be considered. For example, if a first person describes an object, they have a picture of it in their mind and do not need to see it, whereas a second person involved in the conversation would benefit by seeing a picture of the object. Therefore, it would be appropriate to give the object a higher relevance score for the second person than for the first.

Relevance scores can be based, at least in part, on express user input that dynamically impacts the ranking of search results (and corresponding display decisions) in combination with specific aspects of history. For example, a user can tap on a name of an object of possible relevance to get more detail immediately and in the future. For another example, a system can provide a configuration interface in which an assisted user can specify a list of interests as part of their personal profile.

Demoting actions, such as, closing a visual panel (or any graphical element) can demote a specific topic but not necessarily a broader topic. For example, dismissing information about a specific book would decrease its relevance score, but may not decrease the relevance score for the book's author or for the topic of books in general. Depending on the UI action chosen by the user, the impact of a demoting action may vary from a slight topic demotion, to a stronger topic demotion, to blocking a topic entirely. Conversely, promoting actions can promote a set of topics associated with an element or the broader topic. Aspects support selecting text on an element to promote the topics or aspects that the text describes. Various UI actions, including clicks, swipes, or other gestures can be used to demote (including eliminate) and promote.

### Selecting among topics

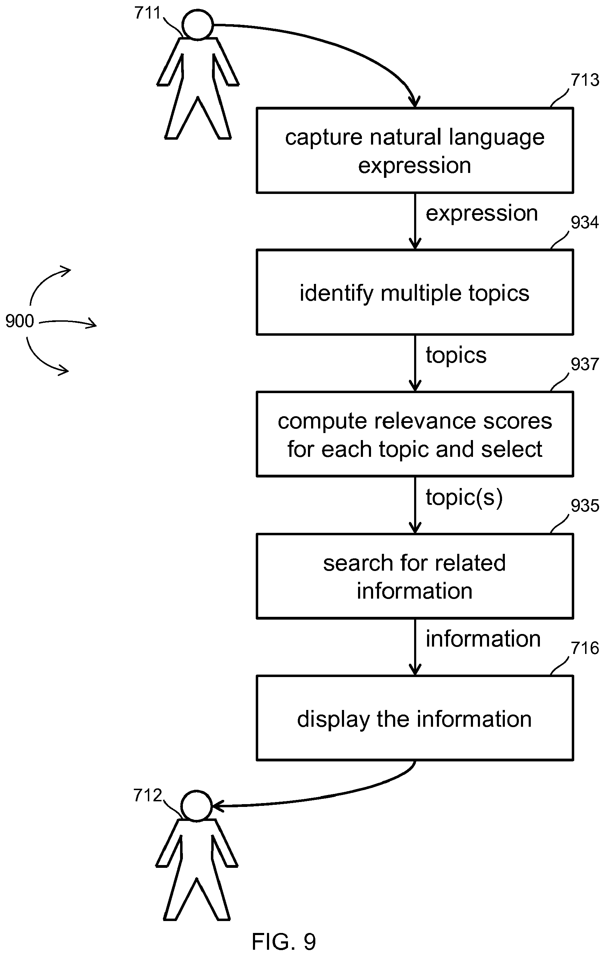

Figure 9 illustrates a data flow 900 for displaying information in response to natural language expressions for multiple topics. In one aspect, one or more topics are selected from multiple possible topics of interest. For example, relevance scores can be computed for each topic and selections may be made based on relevance scores.

In data flow 900, person 711 is engaged in a conversation with an assisted user 712. A NLE is captured from person 711 (713). Multiple topics of interest are identified (934). A relevance score is computed for each topic and one or more topics are selected (937). A search for information on the one or more topics and likely to be related to the NLE is performed (935). If the relevance score for a topic exceeds the threshold, the returned information associated with the topic is displayed to assisted user 712 (716). If the relevance score is below the threshold, the returned information is not displayed.

Searching can also be based on topic score. Topics with relevance scores exceeding a threshold can be searched. In one aspect, a number of topics with higher relevance scores are searched. Multiple topics can be searched and information display space reserved according to the relevance score of each topic.

### Avoiding repetition

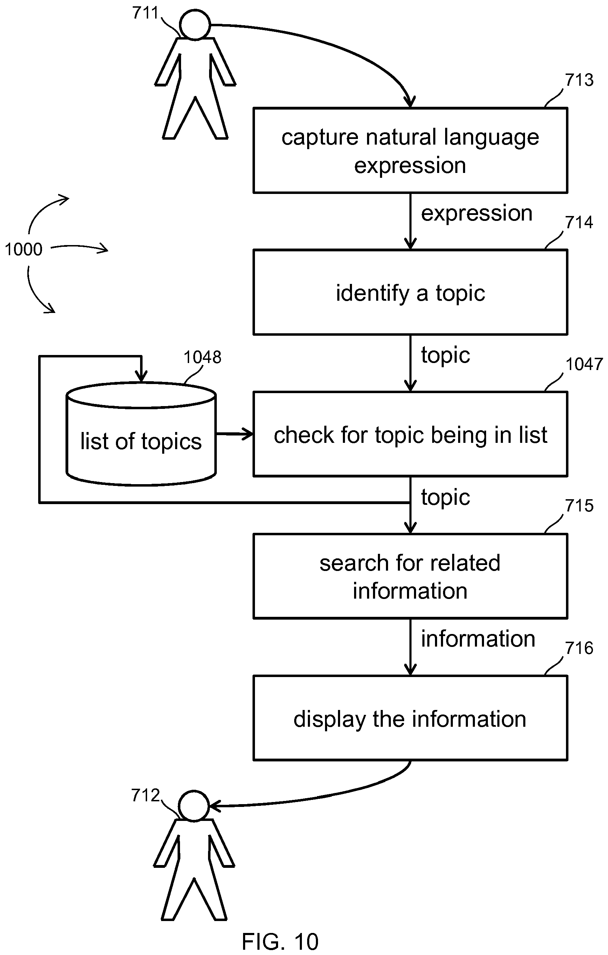

Figure 10 illustrates a data flow 1000 for displaying information in response to natural language expressions for multiple topics. A conversation may remain on one topic during a series of natural language expressions. Thus, it is possible that a person utters multiple natural language expressions on the same topic.

One system design risk is that, as the first person 711 issues multiple natural language expressions on the same topic, the system will display the same information multiple times. There can be various approaches to avoid this.

Data flow 1000 is similar to data flow 700. Person 711 is engaged in a conversation with an assisted user 712. However, after identifying a topic, a check is performed to determine if the topic is in a list of recent topics. For example, in data flow 1000, a NLE is captured from person 711 (713). A topic is identified, for example, by performing NLU on the NLE (714).

It is determined if the identified topic is included in list of topics 1048 (1047). When the identified topic is included in list of topics 1048, the topic may be dropped. On the other hand, when the identified topic is not included in list of topics 1048, the identified topic is added to list of topics 1048. Also when the identified topic is not included in list of topics 1048, a search for information on the topic and likely to be related to the NLE is performed (715). Information returned in response to the search is displayed to assisted user 712 (716). Information can be displayed at an appropriate time, for example, when the information is anticipated to be of interest to assisted user 712.

Topics can be retained in list of topics 1048 for a specified amount of time that may depend on importance and/or permanence of a topic. Importance can be assigned to topics by their design such as, giving a first aid topic higher importance than a recipes topic. Importance can also be scaled by weights resulting from user profile, location, or recent conversation history. For example, inside a building, shopping prices might have higher importance than directions to a store, but in an automobile, directions to a store might have higher importance than prices. Permanence can be determined in relation to a specific user profile. For example, contacts in an address book marked with a star may be considered permanent subjects of conversation. A system can maintain related information about such starred contacts in a buffer local to a device.

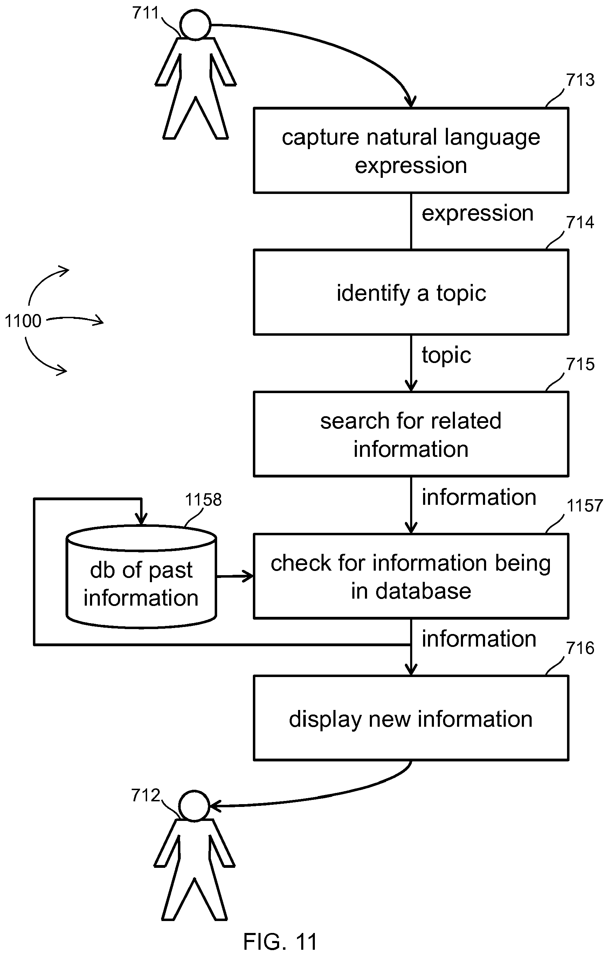

Figure 11 illustrates a data flow 1100 for displaying information in response to natural language expressions without repetition of information. Data flow 1100 is similar to data flow 700. Person 711 is engaged in a conversation with an assisted user 712. However, after searching for and identifying information, a check is performed to determine if the information is included in a database of information. Data flow 1100 can be used to prevent the display of repetitive information when the repetitive information is identified from searches of different topics. For example, in data flow 1100, a NLE is captured from person 711 (713). A topic is identified, for example, by performing NLU on the NLE (714). A search for information on the topic and likely to be related to the NLE is performed (715).

It is determined if information returned in response to the search is included in database of past information 1158 (1157). When the returned information is included in database of past information 1158, the information may be disregarded for display. On the other hand, when the returned information is not included in database of past information 1158, the information is added to database of past information 1158. Also when the returned information is not included in database of past information 1158, the returned information is displayed to assisted user 712 (716). Information can be displayed at an appropriate time, for example, when the information is anticipated to be of interest to assisted user 712.

Information can be stored in database of past information 1158 while the information is being present, for an amount of time approximating how long assisted user 712 might likely have the topic in mind. Information stored in database of past information 1158 can be considered for repeated display after a period of time over which the assisted user 712 might likely remember the information without refreshing, etc.

Aspects of data flows 1000 and 1100 can be used in combination to prevent repetitive searches and repetitive display of information respectively. Determining whether or not to search for or display information can be based on a computed relevance for a topic or returned information respectively. In one aspect, a higher relevance value is computed for infrequently expressed topics or concepts. A global frequency calculation can be scaled by frequencies for any or all conversation participants' individual profile. Thus, on the other hand, in another aspect a higher relevance value is computed for topics or concepts expressed very frequently. A higher relevance value may also be computed for trending topics or concepts, or for topics or concepts related to a person's location or an event on a person's calendar.

Relevance values can be represented, for example, as integers, floating-point numbers, or strings. Relevance values can be compared to a threshold to determine whether to search for and/or display information. Thresholds can be dynamic varying based on the frequency or recency of other information being displayed. A relevance value for a topic or concept can be compared to the relevance values of other topics or concepts recently displayed or captured from the same natural language expression.

### Identifying concepts

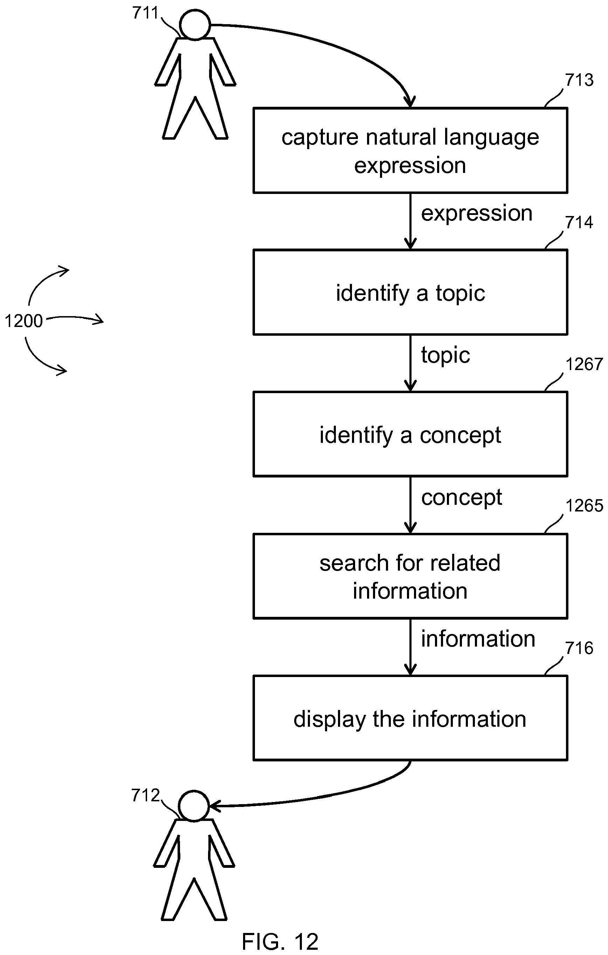

Figure 12 illustrates a data flow 1200 for displaying information in response to natural language expressions using a concept for searching. In one aspect, search inputs are selected to be more granular than a topic, such as, selecting a concept (a finer grain categorization) within a topic. Concepts can be entity values (e.g., people, places, or things) mentioned in natural language expressions. Concepts can also be classes of entities, such as, Teachers, Cities, or Articles_of_Clothing whose instances are any teacher, any city, or any article of clothing. In natural language question answering systems, a slot type can be an entity class, and an entity value for the corresponding slot, if present, is an instance of a class. Entity classes can be arguments and entity values can be the values of those arguments for application programming interface (API) to accesses data sources. In some embodiments, searching for information is through a web API request.

Data flow 1200 is similar to data flow 700. Person 711 is engaged in a conversation with an assisted user 712. However, after identifying a topic, a concept is identified and a search for information of the concept is performed. For example, in data flow 1200, a NLE is captured from person 711 (713). A topic is identified, for example, by performing NLU on the NLE (714).

A concept is identified (1267). A search for information on the concept and likely to be related to the NLE is performed (1265). Information returned in response to the search is displayed to assisted user 712 (716). Information can be displayed at an appropriate time, for example, when the information is anticipated to be of interest to assisted user 712.

In some aspects, a concept is identified without identifying a topic.

### User interest models

The analysis of a natural language expression may be followed by updating a model of the person's interests, based on any content words, topics or intents extracted from the natural language expression 103, and on the conversation to date. According to some aspects, a model of a person's interests is a long-term data structure stored as part of a user profile. It comprises a list of topics, such as weather, sports, and stock prices. According to some aspects, a model of a person's interests comprises specific entities such as Facebook, Mark Zuckerberg, and the stock ticker symbol FB, and the names of the person's children. According to some aspects, a model of a person's interests comprises indications of level of interest based on the frequency or recency of the person's made or received expressions related to an intent, a topic or a content word such as an entity.

In a previously cited example, the NLE "*find me a flight from San Francisco to Seattle*" is represented as a bundle of slot-value pairs, such as, (INTENT, "FLIGHT_RESERVATION), (FLIGHT_FROM, "SFO"), (FLIGHT_TO, "SEA"), (CITY_FROM, "SAN FRANCISCO"), (CITY_TO, "SEATTLE"), date information, and (TOPIC, "TRAVEL"). Each conversation turn creates a bundle of slot-value pairs, and the conversation may be summarized as a sequence of such bundles.

A model of a person's interests can be updated based on this summary. For example, the airport entities ("SFO" and "SEA"), city entities ("SAN FRANCISCO" and "SEATTLE"), the topic ("TRAVEL") and the expression intent (FLIGHT_RESERVATION") all become part of the model. In the model, each slot-value pair in the conversation to date is given an individual relevance weight, and the relevance weights of slot-value pairs in successive bundles can be cumulated or otherwise combined to create a profile of the second person's interests, as a list of entities and relevance weights. Cumulating weights is appropriate when information is compatible, such as inquiring about two flights from "SFO". Combining weights can take other forms, such as reducing the weight of "SEA" after the expression "What if I flew to Vancouver instead?"

The relatively simple techniques just described can be used to update a model of a person's interests based on the conversation to date. In other embodiments, a model of a person's interests may take a more complex form than the simple set of topics, intents and entities, each with relevance weights. The power and complexity of the model reflects the depth of understanding of the NLU system; for example, a smarter system might understand negations, hypotheticals, navigation, planning events in time order or at particular calendar dates, and so on.

### Asking for further information

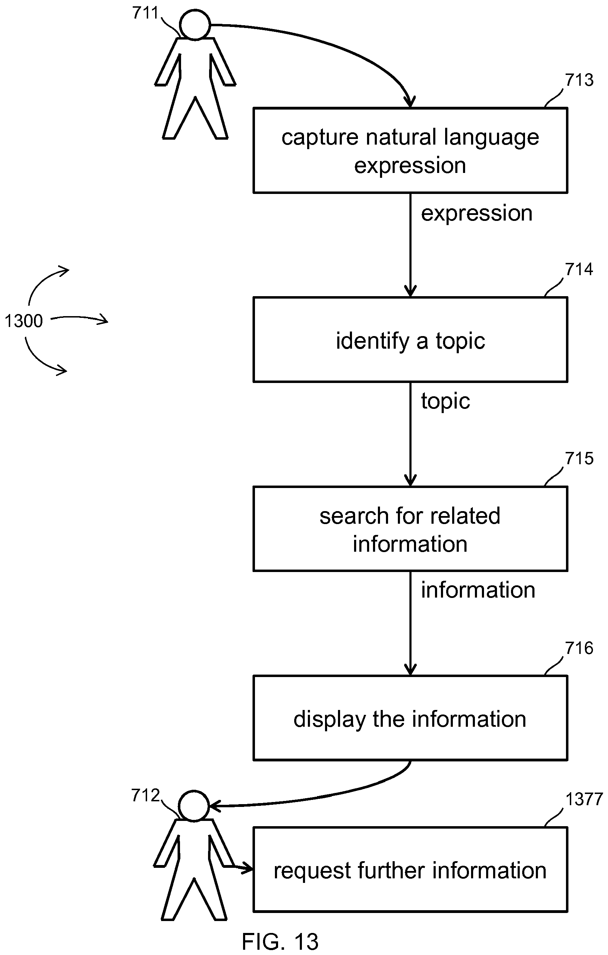

Figure 13 illustrates a data flow 1300 for displaying information in response to natural language expressions and accepting a request for further information. Aspects of the invention permit a person to control what information is visible and to access information deemed relevant. A person can also request further information.

In data flow 1300, person 711 is engaged in a conversation with an assisted user 712. A NLE is captured from person 711 (713). A topic is identified, for example, by performing NLU on the NLE (714).

In one aspect, a plurality of topics are identified from a single NLE. Domain grammars can be used to recognize one or more topics. Topics can also be associated with keywords. Computed relevance scores can indicate a probability that an expression addresses each of a plurality of topics.

A search for information on the topic and likely to be related to the NLE is performed (715). Information returned in response to the search is displayed to assisted user 712 (716). Information can be displayed at an appropriate time, for example, when the information is anticipated to be of interest to assisted user 712.

Further, after information is displayed, assisted user 712 can request further information (1377). Various non-verbal techniques can be used to control access to further information (so a conversation is not interrupted). Further information can be requested by selecting an item or a link or a portion of text by tapping or swiping a display, clicking a button, winking to glasses, or other gestures. In some aspects, a request for further information brings up further information within a display view overlay, in an alternate display device, or as a switch to a different view within the display.

Assisted user 712's electronic device can include detailed controls for dismissing, sharing, filtering, and saving information. A request for further information can include a request for more detail related to displayed information. A response to a request for further information can be another small piece of information or more extensive information such as from a web search.

Assisted user 712's electronic device can track what pieces of information assisted user 712 dismisses. A model (e.g., a list, a neural network, etc.) can be constructed from dismissed information. Using the model, assisted user 712's electronic device can determine whether to show the same or related information in the future.

### Accommodating regions of interest

Some aspects of the invention detect regions of interest within the display space and place displayed information in locations that do not overlap regions of interest. Any of a variety of algorithms can be used to determine regions of interest. Video conferencing systems, for example, can perform face location detection and place information in locations without faces. Regions of interest can also be detected based on the presence of high visual or temporal frequency information. Objects of interest can be recognized and information placed close to such objects or information placed with arrows pointing or lines touching objects of interest. Such aspects can be used, for example, with augmented reality glasses that respond to natural language conversations in progress.

### Translation of languages

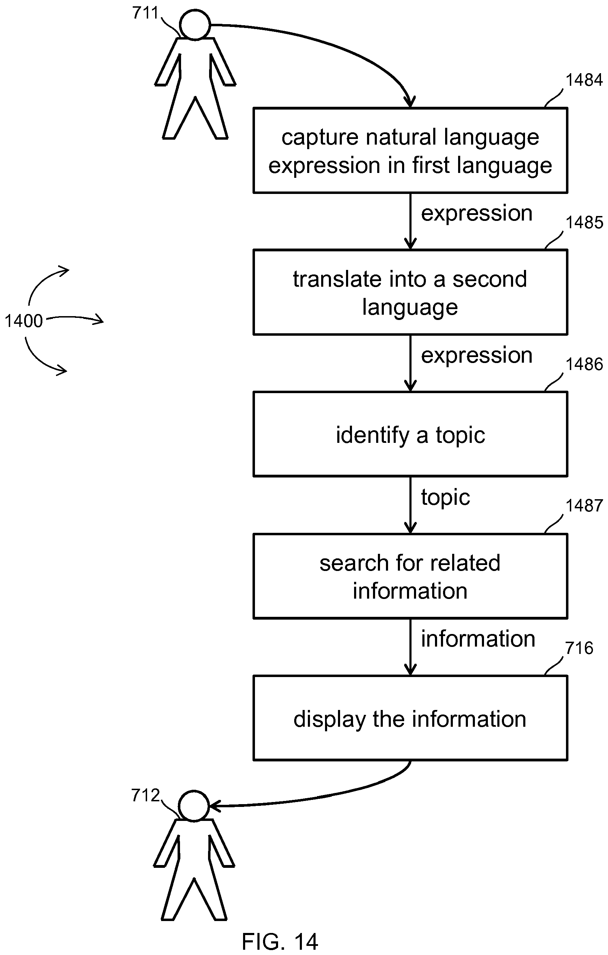

Figure 14 illustrates a data flow 1400 for displaying information in response to natural language expressions in an alternate human language. Conversations can take place locally or in different parts of the world between people that speak different languages. Aspects of the invention can perform NLU in one language and search for information in one or more other languages.

In data flow 1400, person 711 is engaged in a conversation with an assisted user 712. A NLE is captured from person 711 in a first language (1484). The NLE is translated into a second language (1485). A topic is identified from the NLE in the second language (1486).

A search for information on the topic and likely to be related to the NLE is performed in the second language (1487). Information returned in response to the search is displayed to assisted user 712 (716). Information can be displayed at an appropriate time, for example, when the information is anticipated to be of interest to assisted user 712.

In other aspects, translation is performed after topic identification. In further aspects, translation is performed on information return from a search. The second language can be language understood by assisted user 712.

### User profile and environmental dependence

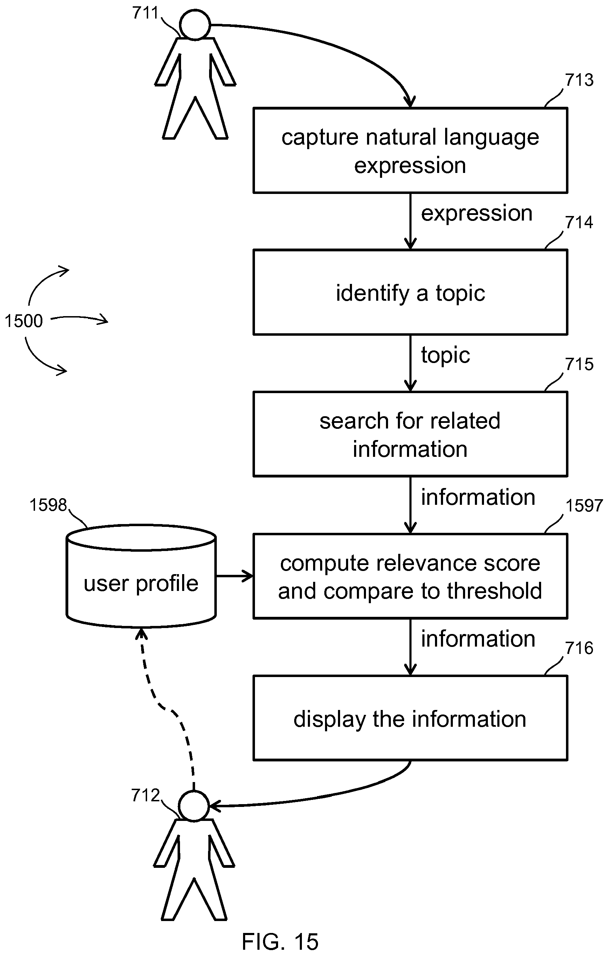

Figure 15 illustrates a data flow 1500 for displaying information in response to natural language expressions based on relevance for a particular user. Displayed information can be tailored based on and/or to interests of a person.

Data flow 1500 is similar to data flow 800. Person 711 is engaged in a conversation with an assisted user 712. However, a relevance score is computed using profile information for assisted user 712. For example, in data flow 1500, a NLE is captured from person 711 (713). A topic is identified, for example, by performing NLU on the NLE (714). A search for information on the topic and likely to be related to the NLE is performed (715).

A relevance score is computed for information returned in response to the search and the relevant score is compared to a threshold (1597). The relevance score is computed using information from user profile 1598 (a user profile for assisted user 712). Information returned in response to the search is displayed to assisted user 712 (716). Information can be displayed at an appropriate time, for example, when the information is anticipated to be of interest to assisted user 712.

Relevance can be computed based on and/or to anticipate the interests of assisted user 712. For example, if user profile 1598 indicates that assisted user 712 has young children, a relevance score of search results for visiting a circus can be elevated relative to a relevance score of search results for a buying a desk. Similarly, if user profile 1598 indicates that assisted user 712 frequently shops at golf stores, a relevance score of search results for the weather can be elevated relative to a relevance score of search results for cooking stores.

A relevance score for a topic can be computed based on contents of a user profile prior to searching for related information. The contents of a user profile can also be used to weight a probability score representing the probability that a topic is interesting or that search results are interesting to a person.

In some aspects, the computation of relevance is also based other external information, which is broadly called current context, such as, for example, a person's location, time of day, day of week, and other situational circumstances. For example, if a person is in a grocery store, the relevance of search results related to coupons can be elevated.

In other aspects, a person explicitly indicates an interest in or a preference for certain topics or concepts. A person's interests can be interpreted from natural language expressions. For example, a person can indicate an interest in weather and traffic conditions presented by the system. The interest in weather and traffic conditions can also be stored in a user profile. Thus, a person's input can provide feedback facilitating learning and personalization to provide the person with more relevant information in the future.

### Multi- and many-party conversation

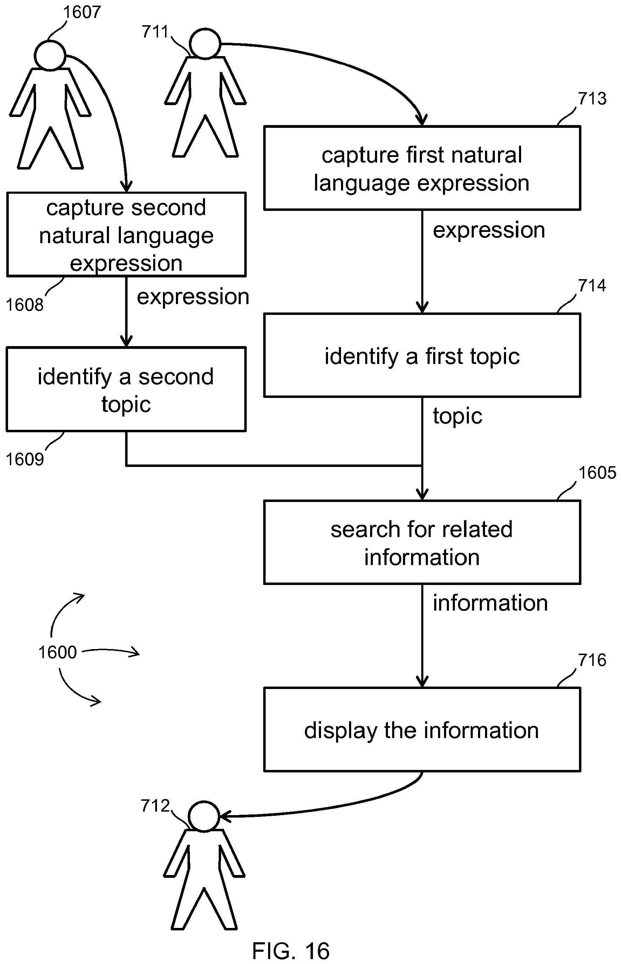

Figure 16 illustrates a data flow 1600 for displaying information in response to natural language expressions from multiple people. Aspects of the invention can provide relevant information to both participants in a two-person conversation. In a two-person conversation, each person is provided relevant information in one direction. Different people participating in a conversation have different information needs.

It may be that whoever speaks knows about a topic of their natural language expression and whoever listens does not know as much. A listener can be provided background information related to what the speaker is saying. Providing background information helps the listener understand and provide optimally informed responses. A speaker can be provided a current state of dynamic information related to their topic such as weather or location-related information. Providing a current state of dynamic information helps the speaker provide more up-to-date and more accurate information.

Aspects of the invention also support 1 to N, N to 1, and N to N conversations, such as, video conference between three or more people. Each person can have a unique view. Some information can be displayed globally to all persons and other information is displayed to some participants based on interest.

Persons 711, 712 and 1607 are engaged in a conversation. A first NLE is captured from person 711 (713). A first topic is identified, for example, by performing NLU on the first NLE (714). A second NLE is captured from person 1607 (1608). A second topic is identified, for example, by performing NLU on the second NLE (1609).

A search for information related to the first topic or the second topic is performed and likely to be related to the first NLE or the second NLE is performed (1605). Information returned in response to the search is displayed to assisted user 712 (716). Information can be displayed at an appropriate time, for example, when the information is anticipated to be of interest to assisted user 712.

Thus, aspects of the invention can support conversations with many people, such as, video conferencing systems and massively distributed games. To manage resources, the frequency of information searches can be limited, such as, to only every fifth natural language expression or every 10 seconds. Such searches can be based on topics and/or concepts expressed in the time since a previous search. This avoids frequent changing of displayed information, which can be distracting or confusing to some assisted users.

### Information searched

Various different types of information can be searched and displayed. In one aspect, information about people, such as, name, location, age, and relationship is searched and displayed. In other aspects, general knowledge information, such as, that available from Wikipedia is search and displayed.

### General operation

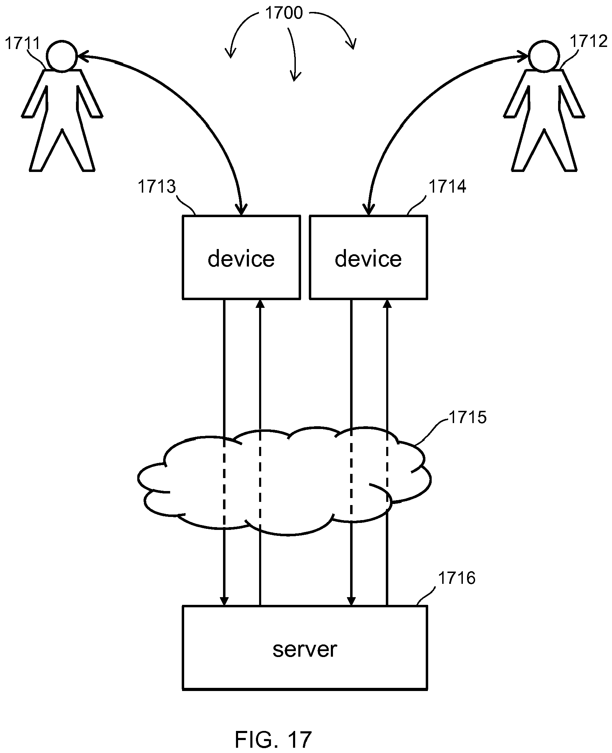

Figure 17 illustrates a computer architecture 1700 supporting multiple devices according to an embodiment. Computer architecture 1700 depicts aspects of a two-way conversation between person 1711 and person 1712. Person 1711 communicates by speech through a multimedia interface device 1713 (e.g., a mobile phone, computer, VR/IR headset, etc.). Multimedia interface device 1713 communicates, as a client, using a networking protocol, through cloud network 1715 to server 1716. Server 1716 provides a virtual connection through cloud network 1715 to multimedia interface device 1714 (e.g., a mobile phone, computer, VR/IR headset, etc.). Multimedia interface device 1714 received speech communication via the virtual connection. Person 1712 can communicate by speech back to multimedia interface device 1713 in a similar manner.

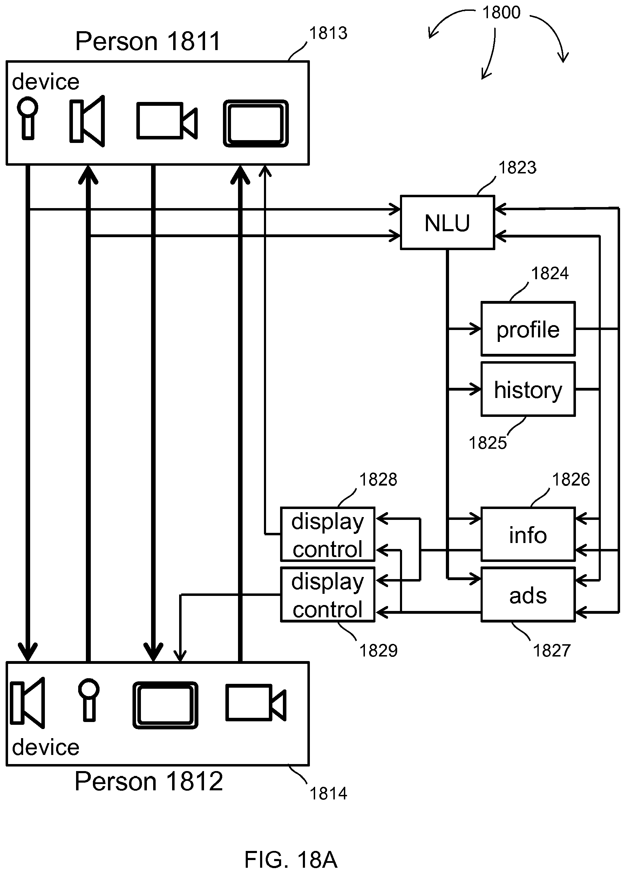

Figure 18A illustrates a computer architecture 1800 with device modules relative to media interfaces. Interface devices 1813 and 1814 each support automatic speech recognition of speech captured by one or more microphones. Interface devices 1813 and 1814 each support outputting audio, including synthesized speech, through one or more speaker. Interface devices 1813 and 1814 each have a camera and a video display screen (e.g., similar to display 108, 308, or 508) to capture and display video. Interface devices 1813 and 1814 can use different forms of audio and video encoding, synchronization, compression, and error correction coding, including real-time video and one-way telecasting.

NLU 1823 can receive spoken expressions from intercepted speech. Results of natural language understanding can be used to build and maintain a user profile 1824 and a conversation history 1825. User profile 1824 can also depend on previously known information. Conversation history 1825, user profile 1824, and other environmental information can be used to influence understanding and improve the probability of selecting relevant information. In one aspect, NLU 1823 outputs a topic. Information module 1826 uses the topic to search for relevant information. Information module 1826 can be integrated into and/or interoperate with a search module, such as, for example, search module 112, 312, or 512. An optional ads module 1827 can use the topic to search for a relevant ad. Both the information module 1826 and the ads module 1827 can use user profile 1824 and conversation history 1825 to enhance their search results relevance.

Display control 1828 provides information to interface device 1813. Interface device 1813 can present information from display control 1828 on a video screen. Similarly, display control 1829 provides information to interface device 1814. Interface device 1814 can present information from display control 1829 on a video screen. Display control 1828 and/or display control 1829 can be integrated into and/or interoperate with a delivery module, such as, for example, delivery module 109, 309, or 509

As such, person 1811 and person 1812 each see information more relevant to their interests. Information is presented visually to support their two-way verbal conversation.

### Video conferencing systems

At each occasion information relevant to the conversation is automatically provided. The information displayed to Bob depends both on what Alice says and on having a high likelihood of being relevant to Bob in the near future as the conversation progresses.

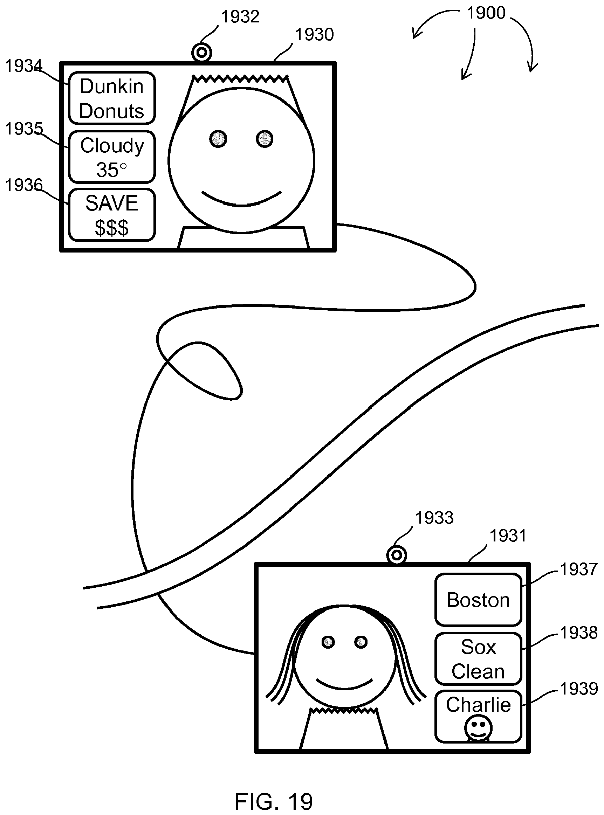

Figure 19 illustrates a video conferencing system 1900. Alice is using video conferencing terminal 1930 and Bob is using a video conferencing terminal 1931. The users are communicating with one another through a network connection. Video conferencing terminal 1930 includes camera and microphone module 1932. Similarly, video conferencing terminal 1931 includes camera and microphone module 1933.

Consider the following example dialog between Alice and Bob and the responsive system activity according to an embodiment.

Alice: "Do you want to go to Boston tomorrow?"

The system displays to Bob Wikipedia introduction for Boston 1937.

The system displays to Alice ad for Dunkin Donuts restaurant in Boston 1934.

Bob: "I can't. I have to do the laundry."

The system displays to Bob ad for laundry detergent 1938.

Alice: "Charlie is going."

The system displays to Alice her three Charlie contacts.

Alice selects one.

System displays to Bob Charlie's photo 1939.

Bob: "What are you going to do?"

Alice: "Either Frisbee or the aquarium."

The system displays to Alice weather forecast 1935 and New England Aquarium coupons 1936.

The system displays to Bob pictures of Boston Common or New England Aquarium based on his profile.

As the example dialog progresses, information is presented in "cards" on video displays. The "cards" are positioned to avoid overlapping faces in the video conference. One person is presented an ad for Dunkin Donuts 1934, a weather forecast for Boston 1935, and a coupon for the New England Aquarium 1936. The other user is presented Wikipedia introductory information about Boston 1937, an ad for laundry detergent 1938, and a photo 1939 of a third person.

Each user can use a swiping gesture to remove cards from the display. If not, each card starts fading after a specified time, for example, 10 seconds. When fading, if the user taps the card it becomes sharp and stays that way, otherwise, after another 5 seconds the card disappears. If the user taps a sharp card, the system performs an associated action such as requesting further information or providing a menu to save the card to a card deck for later reference. Card decks are accessible from a pull-down menu that appears during a downward swipe from the top of the display.

### Single Assisted User

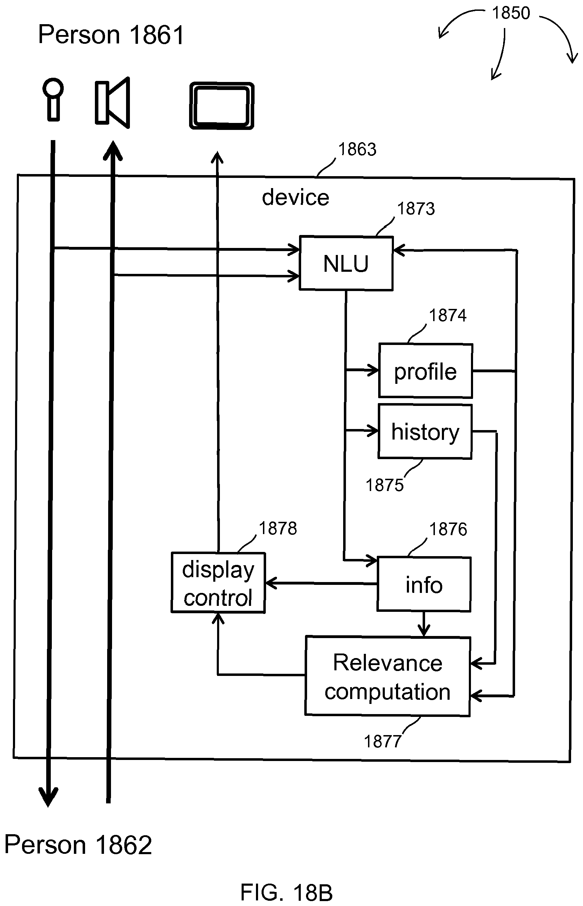

The aspect shown in Figure 18A operates symmetrically between two users, who are both receiving assistance from the system. In contrast, Figure 18B illustrates a computer architecture 1850 that assists only one user, Person 1861. In this aspect, the system is very similar but offers a personal augmentation tool to person 1861, as opposed to mutual augmentation. Person 1862 receives no assistance. In one scenario, person 1862 is at the other end of a phone line. In another scenario, person 1862 may be on the other side of Person 1861's desk, and no telephone is involved, but only person 1861 receives the relevant information. In a third scenario, person 1862 is not a real person, but person 1861 is dictating some text. In all scenarios, person 1861 receives information that is relevant to the speech without interfering with the conversation. In the dictation scenario, the word conversation is a monolog. The aspect shown in Figure 18B is similar to that of Figure 18A, except for the one-way nature of the augmentation, and minor differences. In FIG 18B, the module 1877 that computes the relevance of info 1876 is exposed, while in Figure 18A its presence is only implicit. Also, in FIG 18B, a single device 1863 provides the entire system functionality. In some aspects it is a local self-contained device, while in Figure 18A device 1813 only performs I/O functions and, presumably, leaves the NLU and other functions to a server. These are just some variations of the architecture. Interface device 1863 supports automatic speech recognition of speech captured by one or more microphones; it may output audio through one or more speaker. Interface device 1863 has a display screen used to display the assistive information generated by the system.

NLU 1873 can receive spoken expressions from received speech. Results of natural language understanding can be used to build and maintain a user profile 1874 and a conversation history 1875. User profile 1874 can also depend on previously known information. Conversation history 1875, user profile 1874, and other environmental information can be used to influence understanding and help select the most relevant information. In one aspect, NLU 1873 outputs a topic. Information module 1876 uses the topic to search for relevant information. Information module 1876 can be integrated into and/or interoperate with a search module, such as, for example, search module 112, 312, or 512. An optional ads module (not shown) can use the topic to search for a relevant ad. Both the information module 1876 and the ads module 1877 can use user profile 1874 and conversation history 1875 to improve the relevance of searches.

Display control 1878 presents information on the display screen of device 1863. Display control 1878 can be integrated into and/or interoperate with a delivery module, such as, for example, delivery module 109, 309, or 509. As in method 200 and others, the relevance of the information to the recipient of the information is computed, and the relevance is compared to a threshold to decide whether to display the information; often there is limited space on the screen, and information will be displayed in order of relevance.

In this system, the assisted user 1861 sees information more relevant to their interests. The information is presented visually to support the two-way verbal conversation. In a video conferencing system, the asymmetrical mode of operation can also be supported. For example, a system might be accessed for free by unassisted users, but a fee would be required to access to the user assistance system.

### Wearable devices

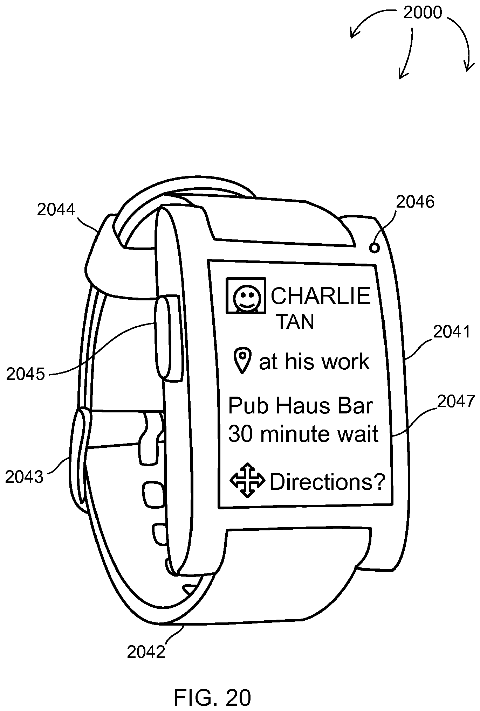

Figure 20 illustrates a wearable device 2000. Wearable device 2000 includes a body 2041, held by a strap 2042, which is held by clasp 2043 and tucked into keeper 2044. Watch body 2041 comprises a display 2047 that shows information, a general control button 2045 on the side, and a microphone hole 2046 for capturing NLEs.

While a wearer of the watch chats with a friend over the phone, the watch detects that the friend is Charlie Tan and shows Charlie's photo and name. The watch retrieves Charlie's location information, indicating that he is at work, and displays that information. The watch, eavesdropping on the conversation using NLU, determines that Charlie and the wearer are discussing getting together at Pub Haus Bar for a tasty drink of cold beer. The watch does a search for restaurant information and finds information that there is a 30-minute wait to get into Pub Haus Bar. The watch also provides a link for the wearer of the watch to tap to get further information about directions for traveling to Pub Haus Bar.

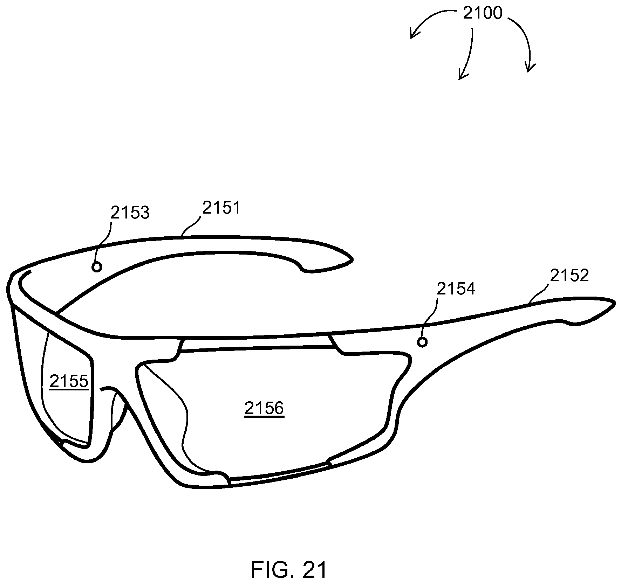

Figure 21 illustrates virtual reality glasses 2100. Virtual reality glasses 2100 include a right earpiece unit 2151 that contains an internal battery, communications module, and processing module among other components within a flexible plastic housing. The glasses further comprise a left earpiece unit 2152 that contains, among other components, a battery with a weight approximately equal to the weight of earpiece unit 2151 within a flexible plastic housing. The weight evenness provides a balanced feel for the wearer. The battery, having the greatest weight, sits near the rear of the earpiece in order to minimize weight on the wearer's nose.

Virtual reality glasses 2100 further include, within earpiece unit 2151, a proximal microphone hole 2153 for capturing speech from the assisted wearer. Virtual reality glasses 2100 further include, within earpiece unit 2152, a distal microphone hole 2154 for capturing speech from other people (e.g., as described with respect to computer architecture 500).

Virtual reality glasses 2100 further include a right display screen 2155 mounted within the right earpiece unit and a left display screen 2156 mounted so as to connect the right earpiece unit 2151 and the left earpiece unit 2152 such that the glasses can wrap around a wearer's head. The display screens 2155 and 2156 are symmetrical to provide for a sympathetic visual field between the wearer's two eyes.

Display screens 2155 and 2156 can be OLED glass displays. The processor in earpiece unit 2151 can control display screens 2155 and 2156 independently. The processor can display information on one or both screens 2155 and 2156 in order to ease the viewing or maximize the amount of information visible to the wearer overlaid on his or her field of vision.

Some aspects provide for the display screens to also act as corrective lenses according to an optical prescription.

### Vehicle heads-up display

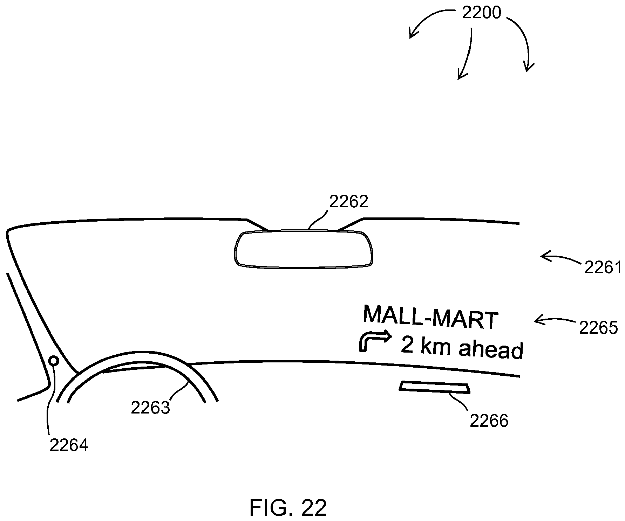

Figure 22 illustrates a vehicle heads-up display 2200 (e.g., in windshield 2261). Windshield 2261 is visible to a driver behind rearview mirror 2262 and steering wheel 2263. A microphone 2264 captures speech. An internal computer processor system performs NLU on the captured speech to determine topics of conversation and search for relevant information. A dashboard embedded projector unit 2266 projects relevant information on a display area 2265 within the visual field of windshield 2261.

It may be that a driver is on a telephone conversation with a spouse and the spouse asks the driver to stop for some groceries before driving home. The topic of conversation "groceries" can be identified from NLEs received during the conversation. A search for grocery store location information can be performed. The grocery store "Mall-Mart" can be identified and presented in display area 2265 along with directions (e.g., turn right in two kilometers).

Optionally, results can be filtered based on paid sponsorships. For example, Mall-Mart may have paid a back-end server provider to have its store locations displayed, whereas Mom-Shop and Pop-Shop did not pay.

### Computer readable media

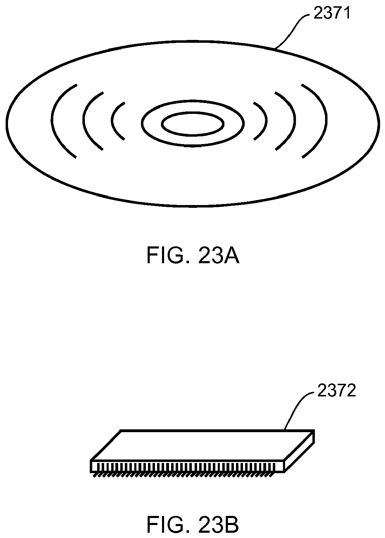

Figure 23A illustrates an example rotating disk 2371. Rotating disk 2371 is an example non-transitory computer readable medium (e.g., a rotating magnetic disk). Cloud data centers can use magnetic disks to store code and data for servers. Rotating disk 2371 can store code comprising instructions that, if executed by one or more computers, would cause the computer to perform methods and data flows described herein. Rotating optical disks and other mechanically moving storage media are also contemplated.

Figure 23B illustrates an example Flash Random Access Memory (RAM) chip 2372. Flash Random Access Memory (RAM) chip 2372 is an example non-transitory computer readable medium. Data centers can use Flash memory to store data and code comprising instructions for server processors. Mobile devices can use Flash memory to store data and code comprising instructions for processors within system-on-chip devices. Flash Random Access Memory (RAM) chip 2372 can store code comprising instructions that, if executed by one or more computers, would cause the computer to perform the methods and data flows described herein. Other non-moving storage media packaged with leads or solder balls are also contemplated.

### System on chip (SoC)

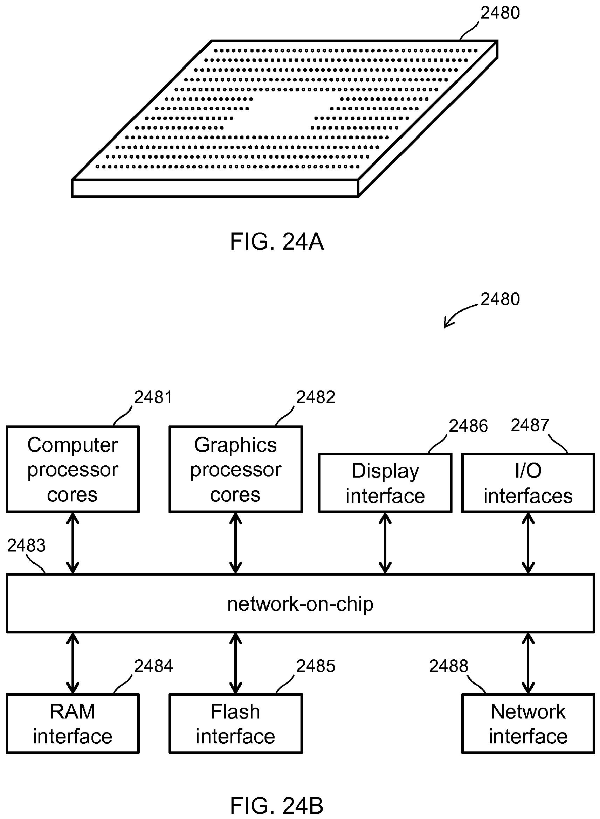

Figure 24A illustrates an example solder ball (bottom) side of packaged System On Chip (SoC) 2480. The bottom side of packaged SoC 2480 is depicted with a ball grid array for surface-mount soldering to a printed circuit board. Various package shapes and sizes are possible for various chip implementations. System-on-chip (SoC) devices can control embedded systems and IoT device embodiments as described herein.

Figure 24B illustrates an example architecture of System On Chip (SoC) 2480. System On Chip (SoC) 2480 includes a multicore cluster of computer processor (CPU) cores 2481 and a multicore cluster of graphics processor (GPU) cores 2482. The processor cores connect through a network-on-chip 2483 to an off-chip dynamic random-access memory (DRAM) interface 2484 for volatile program and data storage. The processor cores also connect to a Flash interface 2485 for non-volatile storage of computer program code in a Flash RAM non-transitory computer readable medium.

SoC 2480 also includes a display interface 186 for displaying a GUI and an I/O interface module 2487 for connecting to various I/O interface devices, as appropriate for different peripheral devices. The I/O interface enables sensors such as touch screen sensors, geolocation receivers, microphones, speakers, Bluetooth peripherals, and USB devices, such as keyboards and mice, among others. SoC 2480 also comprises a network interface 2488. Network interface 2488 allows the processor cores to access the Internet (or other networks) through wired or wireless connections such as WiFi, 3G, 4G long-term evolution (LTE), 5G, and other wireless interface standard radios as well as ethernet connection hardware. By executing instructions stored in RAM devices through interface 2484 or Flash devices through interface 2485, the CPUs 2481 and GPUs 2482 can perform methods and/or data flows as described herein.

### Server

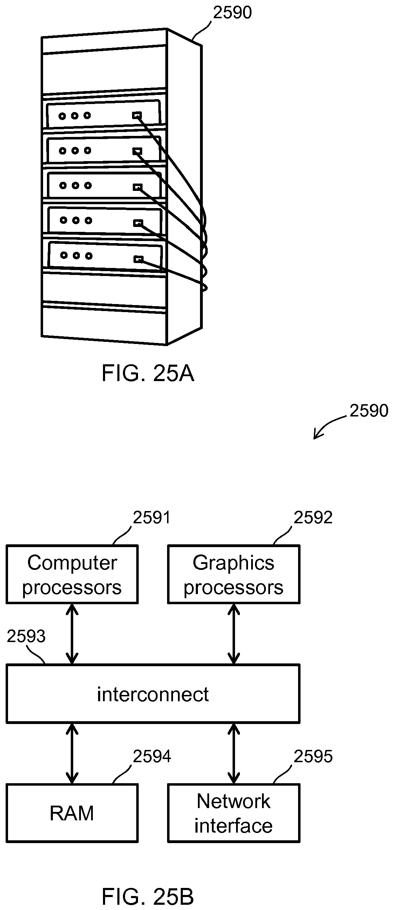

Figure 25A illustrates an example of a rack-based server 2590. Rack based server 2590 can include a plurality of rack-mounted multi-processor server blades. The plurality of rack-mounted multi-processor server blades can each include a multiplicity of network-connected computer processors. The multiplicity of network-connected computer processors can run software in parallel.

Figure 25B illustrates an example architecture of a server 2590. The architecture includes a multicore cluster of CPU cores 2591 and a multicore cluster of GPU cores 2592. The processors connect through a board-level interconnect 2593 to RAM devices 2594 for program code and data storage. Server system 2590 also comprises a network interface 2598 to allow the processors to access the Internet (or other networks). By executing instructions stored in RAM devices through interface 2594, the CPUs 2591 and GPUs 2592 can perform methods and/or data flows as described herein.

Descriptions herein reciting principles, aspects, and embodiments encompass both structural and functional equivalents thereof.

Some embodiments are shown and described as method steps. Each method step can be equivalent to a system component in some embodiments.

This disclosure describes various embodiments of the present invention that illustrate various interesting aspects. Practitioners skilled in the art may recognize many modifications and variations. The modifications and variations include any relevant combination of the disclosed features.

Various embodiments are methods that use the behavior of either or a combination of humans and machines. Method embodiments are complete wherever in the world most constituent steps occur. Some embodiments are one or more non-transitory computer readable media arranged to store such instructions for methods described herein. Whatever machine holds non-transitory computer readable media comprising any of the necessary code holds a complete embodiment. Some embodiments are physical devices such as semiconductor chips; hardware description language representations of the logical or functional behavior of such devices; and one or more non-transitory computer readable media arranged to store such hardware description language representations.

Examples shown and described use certain spoken languages. Various embodiments operate, similarly, for other languages or combinations of languages. Examples shown and described use certain domains of knowledge. Various embodiments operate similarly for other domains or combinations of domains.

Some embodiments are stationary, such as a vending machine. Some embodiments are mobile, such as an automobile. Some embodiments are portable, such as a mobile phone. Some embodiments comprise manual interfaces such as keyboard or touch screens. Some embodiments comprise neural interfaces that use human thoughts as a form of natural language expression.

The foregoing description has been presented for the purposes of illustration and description. It is not intended to be exhaustive or to limit the invention to the precise form disclosed. Many modifications and variations are possible in light of the above teaching. Further, it should be noted that any or all of the aforementioned alternate embodiments may be used in any combination desired to form additional hybrid embodiments of the invention.

Further, although specific embodiments of the invention have been described and illustrated, the invention is not to be limited to the specific forms or arrangements of parts so described and illustrated. The scope of the invention is to be defined by the claims appended hereto, any future claims submitted here and in different applications, and their equivalents.

The present disclosure extends to methods, systems, and computer program products for automatically visually presenting information relevant to an utterance. Natural language expressions from conversation participants are received and processed to determine a topic and concepts, a search finds relevant information and it is visually displayed to an assisted user. Applications can include video conferencing, wearable devices, augmented reality, and heads-up vehicle displays. Topics, concepts, and information search results are analyzed for relevance and non-repetition. Relevance can depend on a user profile, conversation history, and environmental information. Further information can be requested through non-verbal modes. Searched and displayed information can be in languages other than that spoken in the conversation. Many-party conversations can be processed.

The disclosure comprises the following items:
1. A method of displaying information relevant to a person in a conversation, the method comprising:
   intercepting a natural language expression electronically transmitted from a first device to a second device, the natural language expression included in a conversation between a first person using the first device and a second person using the second device;
   locating information related to the natural language expression stored at a network storage location;
   buffering the located information until the located information is anticipated to be of interest to the second person; and
   transmitting the information to the second device to arrive before the information is anticipated to be of interest to the second person.
2. The method of item 1 further comprising deriving a topic from the natural language expression.
3. The method of item 2 wherein locating information related to the natural language expression comprises searching for information related to the derived topic.
4. The method of item 1 further comprising, prior to transmitting the information:
   computing a relevance score for the information; and
   determining that the relevance score exceeds a threshold.
5. The method of item 4, further comprising:
   accessing additional information about the second person from a user profile,
   wherein computing a relevance score for the information comprises computing a relevance score for the information based on the additional information.
6. The method of item 4 further comprising:
   accessing additional information from a history of the verbal conversation,
   wherein computing a relevance score for the information comprises computing a relevance score for the information based on the additional information.
7. The method of item 1 further comprising, prior to transmitting the information, determining that the information is non-repetitive information.
8. The method of item 1 wherein the natural language expression is expressed in a first human language, the method further comprising:
   translating the natural language expression to a second human language,
   wherein locating information related to the natural language expression comprises locating information expressed in the second human language; and
   wherein transmitting the information to the second device comprises transmitting the information expressed in the second human language.
9. The method of item 1 further comprising receiving, from the second device, a request for additional detail related to the transmitted information.
10. The method of item 1 further comprising:
   receiving a second natural language expression at the first device, the second natural language expression electronically transmitted from a third device included in the conversation;
   identifying second information related to the second natural language expression; and buffering the second information,
   wherein the transmitting to the second device comprises transmitting the information and the second information.
11. The method of item 1 further comprising displaying the information at a display screen mounted within a pair of glasses.
12. A method of displaying information relevant to a person participating in a conversation, the method comprising:
   receiving a natural language expression from a person involved in a conversation with another person; and
   responsive to receiving a natural language expression from the person:
      updating a model of the person's interests, based on the conversation to date;
      identifying information related to the natural language expression;
      computing a relevance of the identified information to the person, based on the model of the person's interests; and
      responsive to the relevance of the information to the person being above a threshold, displaying the information to the person.
13. The method of item 12, wherein updating the model of the person's interests includes determining a topic of interest.
14. The method of item 12, wherein updating the model of the person's interests includes determining an intent.
15. The method of item 12, wherein updating the model of the person's interests includes determining a plurality of topics of interest and corresponding relevance scores.
16. The method of item 12, wherein computing the relevance of the information to the person is based on both the model of the person's interests and a current context.
17. The method of item 12, further comprising determining, prior to displaying the information, that the information is non-repetitive information.
18. The method of item 12, further comprising accessing additional information about the person from a user profile,
   wherein updating the model of the person's interests is based on the additional information from the user profile.
19. The method of item 12, further comprising:
   receiving a second natural language expression from a second person involved in the conversation;
   identifying additional information related to the second natural language expression; and
   displaying the additional information.
20. The method of item 12, wherein the received natural language expression is expressed in a first human language, the method further comprising translating the received natural language expression to a second human language,
   wherein locating information related to the received natural language expression comprises locating information expressed in the second human language.
21. The method of item 12, further comprising receiving a request for additional detail related to the information.
22. The method of item 12, further comprising displaying the information at a display screen mounted within a pair of glasses.
23. A device for assisting a user by displaying information relevant to a natural language conversation, the device comprising:
   means for capturing a natural language expression made by a first person to a second person;
   means for identifying a particular topic related to the natural language expression;
   means for searching for information related to the particular topic; and
   means for displaying the information to the second person responsive to capturing the natural language expression from the first person.
24. The device of item 23 wherein capturing is by application of automatic speech recognition to an audio signal.
25. The device of item 23 further comprising:
   means for computing a relevance value corresponding to the particular topic,
   wherein displaying the information depends on the relevance value.
26. The device of item 23 further comprising:
   means for identifying a second topic related to the natural language expression;
   means for computing a first relevance value corresponding to the particular topic; and
   means for computing a second relevance value corresponding to the second topic,
   wherein displaying the information depends upon the first relevance value exceeding the second relevance value.
27. The device of item 23 further comprising:
   means for storing a list of recent topics,
   wherein displaying the information depends on the absence of the particular topic from the list.
28. The device of item 23 further comprising:
   means for storing indications of other recently displayed information,
   wherein displaying the information depends on the absence of an indication of the information from among the other recently displayed information.
29. The device of item 23 further comprising:
   means for identifying a concept related to the particular topic,
   wherein the search is based on the concept.
30. The device of item 23 wherein the display is to the assisted user only.
31. The device of item 23 further comprising:
   means for providing non-verbal display of further information.
32. The device of item 23 wherein the displaying is overlaid over a view of a video conference.
33. The device of item 23 wherein the displaying is within the visual field of a wearable display device.
34. The device of item 23 further comprising:
   means for detecting the location of a face within a display; and
   means for placing the displayed information in a part of the display that does not overlap the face.
35. The device of item 23 wherein the displaying is in a head-up display of a vehicle.
36. The device of item 23
   wherein the natural language expression is in a first human language,
   the device further comprising:
   means for translating the natural language expression into a second human language.
37. The device of item 23 further comprising:
   means for storing profile information about a conversation participant; and
   means for computing a relevance value for the particular topic based on the profile information,
   wherein displaying the information depends on the relevance value.
38. The device of item 37 wherein the profile information is dependent upon relevance feedback from a user.
39. The device of item 23 further comprising:
   means for capturing a second natural language expression made by a third person; and
   means for identifying a second topic related to the second natural language expression.
40. The device of item 23 wherein the information is an ad.

## Claims

1. A computer-implemented method for enhancing a natural language conversation between a first person and a second person, the method comprising:
receiving an audio signal comprising a spoken utterance made by the first person;
applying speech recognition to the audio signal to derive a natural language expression corresponding to the spoken utterance;
analysing the natural language expression to identify a topic related to the natural language expression;
searching for information related to the topic;
retrieving a search result from the search; and
causing the search result to be displayed to the second person.

2. The method of claim 1 further comprising:
computing a relevance value corresponding to the topic,
wherein the search is performed in response to the relevance value corresponding to the topic exceeding a threshold relevance value.

3. The method of claim 1 further comprising:
computing a relevance value corresponding to the topic,
wherein the search result from the search for information related to the topic is caused to be displayed in response to the relevance value corresponding to the topic exceeding a threshold relevance value.

4. The method of any preceding claim, further comprising:
analysing the natural language expression to identify at least one further topic related to the natural language expression; and
computing relevance values, each corresponding to a respective one of the topics,
wherein the search is performed for the topic that has the highest relevance value.

5. The method of any of claims 1 to 3, further comprising:
analysing the natural language expression to identify at least one further topic related to the natural language expression;
searching for information related to the at least one further topic;
retrieving at least one futher search result from the search for information related to the at least one further topic; and
computing relevance values, each corresponding to a respective one of the search results,
wherein the search result caused to be displayed is the search result having the highest relevance value.

6. The method of claim 1, wherein the search is performed in response to the topic being identified as absent from a list of recent topics.

7. The method of claim 1, wherein the search result from the search for information related to the topic is caused to be displayed in response to the search result being identified as absent from a list of recently displayed search results.

8. The method of any preceding claim, further comprising:
identifying a concept related to the topic,
wherein the search is performed by searching for information related to the concept.

9. The method of any preceding claim, wherein the search result is caused to be displayed to the second person only.

10. The method of any preceding claim, further comprising:
after the search result has been caused to be displayed, receiving a request by a non-verbal technique from the second person for further information;
retrieving the further information; and
causing the further information to be displayed to the second person.

11. The method of any preceding claim, wherein causing the search result to be displayed to the second person comprises causing the search result to be displayed within a visual field of a wearable display device associated with the second person.

12. The method of any preceding claim, wherein causing the search result to be displayed to the second person further comprises:
detecting the location of a face within a display associated with the second person; and
causing the search result to be displayed in a part of the display associated with the second person that does not overlap the face.

13. The method of any preceding claim, wherein causing the search result to be displayed to the second person further comprises causing the search result to be displayed in a head-up display of a vehicle associated with the second person.

14. The method of claim 1, wherein the natural language expression is in a first human language, the method further comprising:
translating the natural language expression in the first human language into a natural language expression in a second human language, wherein the step of analysing the natural language expression comprises analysing the natural language expression in the second human language.

15. The method of any of claims 2 to 5, further comprising:
storing profile information about the first person, wherein the relevance values are calculated based on the profile information of the first person.

16. The method of claim 15, wherein the profile information is dependent upon relevance feedback from a user.

17. The method of claim 1 further comprising:
receiving a second audio signal comprising a second spoken utterance made by a third person;
applying speech recognition to the second audio signal to derive a second natural language expression corresponding to the second spoken utterance;
analysing the second natural language expression to identify a second topic related to the second natural language expression;
searching for information related to the second topic;
retrieving a second search result from the search; and
causing the second search result to be displayed to the second person.

18. A non-transitory computer-readable medium storing computer-readable code that, if executed by a computer-executable component, would cause the computer-executable component to perform the method of any preceding claim.
